(19) **Europäisches Patentamt / European Patent Office / Office européen des brevets**

(11) **EP 4 620 265 B1**

(12) **EUROPEAN PATENT SPECIFICATION**

(45) Date of publication and mention
of the grant of the patent:
**29.10.2025  Bulletin 2025/44**

(21) Application number: **24708691.1**

(22) Date of filing: **23.02.2024**

(51) International Patent Classification (IPC):
**H05B 7/144** (2006.01)    **H02M 3/335** (2006.01)
**H02M 7/04** (2006.01)

(52) Cooperative Patent Classification (CPC):
**H05B 7/144; H02M 1/007; H02M 3/00; H02M 7/02; H02M 7/42**

(86) International application number:
**PCT/EP2024/054667**

(87) International publication number:
**WO 2024/175779 (29.08.2024 Gazette 2024/35)**

(54) **FURNACE POWER SUPPLY APPARATUS, SYSTEM FOR THE POWER SUPPLY OF A FURNACE, FURNACE, USE OF THE FURNACE POWER SUPPLY APPARATUS AND OPERATING METHOD**

OFENSTROMVERSORGUNGSVORRICHTUNG, SYSTEM ZUR STROMVERSORGUNG EINES OFENS, OFEN, VERWENDUNG DER OFENSTROMVERSORGUNGSVORRICHTUNG UND BETRIEBSVERFAHREN

APPAREIL D'ALIMENTATION ÉLECTRIQUE DE FOUR, SYSTÈME D'ALIMENTATION ÉLECTRIQUE DE FOUR, FOUR, UTILISATION DE L'APPAREIL D'ALIMENTATION ÉLECTRIQUE DE FOUR ET PROCÉDÉ DE FONCTIONNEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.02.2023  DE 102023104536**

(43) Date of publication of application:
**24.09.2025  Bulletin 2025/39**

(73) Proprietor: **SMS group S.p.A.**
**33017 Tarcento (UD) (IT)**

(72) Inventors:
• **NERI, Luca**
**33010 Pagnacco (IT)**
• **IONITA, Mircea G.**
**40629 Düsseldorf (DE)**

(74) Representative: **Richly & Ritschel Patentanwälte PartG mbB**
**Sattlerweg 20**
**51429 Bergisch Gladbach (DE)**

(56) References cited:
**EP-A1- 4 113 813        EP-B1- 1 421 826**
**WO-A1-2021/224192    CN-A- 110 350 606**
**US-A1- 2022 286 036**

## Description

The present invention relates to a furnace power supply apparatus, a system for the power supply of a furnace, a furnace, a use of the furnace power supply apparatus and an operating method.

Metals, especially steel, are regularly melted and heated by an electric arc in melting units. These electrically operated melting units, in particular an electric arc furnace, an electric reduction furnace or a submerged arc-resistance furnace, are operated with direct current (DC), alternating current (AC) or multiphase alternating current. Usually, at least one electrode is used for this purpose, which projects through the furnace lid into the furnace vessel, while the other electrodes are provided corresponding to the first electrode or are arranged in the bottom of the melting vessel.

Electric arc furnaces, electric reduction furnaces or submerged arc-resistance furnaces represent a highly nonlinear load, which means that the operation of an electric arc furnace, an electric reduction furnace or a submerged arc-resistance furnace can lead to undesirable electrical network distortions, in particular flicker, higher harmonic currents, and the like, on the electrical supply network.

CN110350606A discloses an electric arc furnace DC chopper power supply device and method, which can quickly compensate for arc fluctuations, so that the arc power is kept substantially stable, and the power pollution problem of the power grid is solved from the source, and is not required. The reactive power compensation device and the controllable chopper unit composed of the power electronic device are configured to greatly reduce the output current ripple, thereby improving the working efficiency of the electric arc furnace and prolonging the service life of the electrode.

US 2022/0286036 Al discloses a power supply device and a power supply method for a DC electric arc furnace, wherein the power supply device comprises phase-shifting rectifier transformers, rectifying units and a regulator; through a structural design of a plurality of branches and a plurality of rectifying units at an output end of each phase-shifting rectifier transformer, and a structural design that outputs of the plurality of rectifying units are connected in parallel and then connected to a power supply short network of a DC electric arc furnace through bus bars, a current output topological structure is formed, which can provide a stable large current for one electrode assembly, and a plurality of current output topological structures can supply power to a plurality of electrode assemblies, so that requirement of a larger power supply current of the DC electric are furnace can be satisfied.

EP 1 421 826 B1 discloses a device for supplying DC current to M arc furnace loads, M being an integer number greater than or equal to 2, the device comprising at least one transformer whose primary is supplied by a three-phase AC current and which delivers, from at least two secondaries, a three-phase current, and N diode rectifiers, each diode rectifier having one input port and one output port, one diode rectifier input port being connected to a different transformer secondary.

WO 2021/224192 A1 discloses an electrical converter for converting between an AC signal comprising three phase voltages and a galvanically isolated DC signal, comprising three phase terminals and two DC terminals.

EP 4 113 813 A1 discloses a power electronic apparatus for converting input alternating current into direct current.

The invention is based on the task of providing the state of the art with an improvement.

According to a first aspect of the invention, the task is solved by a furnace power supply apparatus for the supply of an electric arc furnace, electric reduction furnace or a submerged arc-resistance furnace with electric energy,

- wherein the furnace power supply apparatus is connectable to a three phase power network, preferably a medium-voltage three phase power network;
- wherein the furnace power supply apparatus is connectable to at least one electrode of the electric arc furnace, electric reduction furnace or the submerged arc-resistance furnace,
- wherein the furnace power supply apparatus comprises:

    - at least one AC/DC converter circuit connectable to the three phase power network and configured to rectify an alternating current of at least one phase of the three phase power network, wherein the three phase power network has a voltage level higher than or equal to 1000 VAC, and
    - at least one DC/DC converter circuit configured to handle a voltage level higher than or equal to 500 VDC, wherein the DC/DC converter circuit is connected to the direct current side of the AC/DC converter circuit.

First of all, it should be expressly pointed out that in the context of this patent application indefinite articles and figures such as "one", "two", etc. should normally be understood as "at least" information, i.e. "at least one ...", "at least two ...", etc., unless it is expressly apparent from the respective context or it is obvious or technically mandatory for the person skilled in the art that only "exactly one ...", "exactly two ...", etc. can be meant.

In the context of this patent application, the term "in particular" and/or "particularly" should always be understood as meaning that this term introduces an optional, preferential feature. The expression is not to be understood as "namely".

It is proposed here to control the amount of total harmonic distortion (THD), particularly to reduce the amount of THD using a fully bidirectional furnace power supply apparatus. This can significantly reduce grid disturbances and, at the same time, improve the efficiency of use of the energy provided by a power network increasing the power factor of the energy provided, because THD can be minimized or prevented.

It is further particularly proposed here to control the power factor, particularly to increase the power factor of a furnace power supply apparatus by using a fully bidirectional furnace power supply apparatus, preferably using an active front end. This can reduce the need for an external power compensator such as a static reactive power compensator (SVC) or a static synchronous compensator (STATCOM) as the furnace power supply apparatus is able to regulate reactive power instantaneously introduced to a power network, particularly supply and/or sink reactive power. This greatly reduces the required area for installation and the cost of an electric arc furnace, an electric reduction furnace or a submerged arc-resistance furnace at a given factory side.

Total harmonic distortion (THD) can be defined as the ratio of the root mean square (RMS) amplitude of a set of higher harmonic frequencies to the RMS amplitude of the first harmonic or fundamental frequency. It can be calculated with the following formula:

$$THD_Y = \frac{\sqrt{\sum_{h=2}^{\infty} Y_h^2}}{Y_{1,RMS}}$$

where:

    $THD_Y$ = Total harmonic distortion of the signal Y;
    $Y_h$ = amplitude of the $h^{th}$ harmonic; and
    $Y_{1,RMS}$ = RMS value of the amplitude of fundamental frequency.

The electrical load on the three phase power network during operation of an electric arc furnace, an electric reduction furnace or a submerged arc-resistance furnace can be asymmetrical, causing a harmonic distortion of the three phase power network. The total harmonic distortion of the three phase power network can be influenced by using a fully bidirectional furnace power supply apparatus allowing instantaneous energy flow from the three phase power network to a load and vice versa. In particular, the total harmonic distortion can be minimized by using fully bidirectional converter components, in particular an active front end.

The instantaneous apparent power ($P_{ist}$) can be defined by the product of instantaneous voltage ($V_{ist}$) and instantaneous current ($I_{ist}$) using the following formula:

$$P_{ist} = V_{ist} * I_{ist}$$

where:

$P_{ist}$ = instantaneous apparent power
$V_{ist}$ = instantaneous voltage
$I_{ist}$ = instantaneous current

The portion of instantaneous apparent power that results in net transfer of energy in one direction is known as instantaneous "active power". The portion of instantaneous power that results in no net transfer of energy but instead oscillates between the source and load in each cycle due to stored energy in the alternating current system, is known as instantaneous "reactive power". The ratio of active power and apparent power is known as "power factor". The higher the power factor of a given electrical energy transfer the higher the net transfer of energy for a given transfer of apparent power and thus the higher the efficiency of that net energy transfer.

An "electric arc furnace" is a furnace that uses electric energy provided and/or treated by a "furnace power supply apparatus" to generate an electric arc to melt a metal mass, particularly scrap metal and/or a scrap metal mix and/or direct reduced iron (DRI) and/or hot briquetted iron (HBI) and/or hot metal and/or flux materials, in the electric arc furnace. An electric arc furnace can be a ladle furnace.

The electric arc forms between the charged material and the electrode. The charge of the electric arc furnace is heated both by current passing through the charge and by the radiant energy evolved by the arc. The electric arc temperature can reach around 3.000 °C or higher.

An "electric reduction furnace" is a furnace that uses electric energy provided and/or treated by a furnace power supply apparatus to generate an electric arc to melt a metal mass, particularly srap metal and/or a scrap metal mix of Ferroalloys such as, but not limited to ferronickel (FeNi), ferromanganese (FeMn), ferroaluminum (FeAl) ferrotungsten (FeW), ferrochromium (FeCr), ferrotitanium (FeTi), ferromagnesium (FeMg) or the like, in the electric reduction furnace.

A "submerged arc-resistance furnace" is a furnace that uses electric energy provided and/or treated by a furnace power supply apparatus to generate arcs between the electrode and the charge material or heats up the charge material by the resistance heating (Joule effect). The charged Materials typically are nonferrous metal, ore and materials, reductants, but can be also iron alloys, waste recycling, slag and cleaning of slag.

An electric arc furnace, an electric reduction furnace or a submerged arc-resistance furnace can have a charge capacity greater than or equal to 1 ton, preferably greater than or equal to 20 ton, and particularly preferably greater than or equal to 50 ton. Further advantageously, an electric arc furnace or a submerged arc-resistance furnace can have a charge capacity greater than or equal to 100 ton, preferably greater than or equal to 200 ton, and particularly preferably greater than or equal to 400 ton.

The furnace power supply apparatus can be connected with an electric arc furnace, an electric reduction furnace or a submerged arc-resistance furnace, particularly with an electrode of the electric arc furnace, the electric reduction furnace or a submerged arc-resistance furnace by busbars or bustubes, which can be cooled with air, gas, water or another appropriate cooling medium which is different than water or gas, by cables or other appropriated electric power transmission medium, like for example copper, aluminum or the like. The furnace power supply apparatus particularly preferably can comprise less than one furnace transformer. In other words, the furnace power supply apparatus may be directly connectable to at least one electrode of an electric arc furnace, an electric reduction furnace or a submerged arc-resistance furnace.

A "three phase power network" is a polyphase system used for electricity generation, transmission and distribution. A three phase power network provides alternating current (AC), particularly three alternating currents, wherein each alternating current has a +120 degree phase difference to one of the two other alternating currents and a -120 degree phase difference to the respective other alternating current.

The three phase power network may be a high-voltage three phase power network or a medium-voltage three phase power network or a low-voltage three phase power network.

High-voltage can be greater than or equal to 36 kV, preferably greater than or equal to 60 kV, and particularly preferably greater than or equal to 100 kV. Further advantageously, high-voltage can be greater than or equal to 150 kV, preferably greater than or equal to 200 kV, and particularly preferably greater than or equal to 300 kV. Further advantageously, high-voltage can be greater than or equal to 400 kV, preferably greater than or equal to 700 kV, and particularly preferably greater than or equal to 1100 kV.

Medium-voltage can be less than or equal to 36 kV. Further advantageously, medium-voltage can be less than or equal to 30 kV, preferably less than or equal to 20 kV, and particularly preferably less than or equal to 15 kV.

Medium-voltage can be greater than or equal to 1 kV, preferably greater than or equal to 2 kV, and particularly preferably greater than or equal to 10 kV. Further advantageously, medium-voltage can be greater than or equal to 15 kV, preferably greater than or equal to 20 kV, and particularly preferably greater than or equal to 30 kV.

Low-voltage can be greater than or equal to 50 V, preferably greater than or equal to 60 V, and particularly preferably greater than or equal to 100 V. Further advantageously, low voltage can be greater than or equal to 120 V, preferably greater than or equal to 220 V, and particularly preferably greater than or equal to 240 V.

Low-voltage can be less than or equal to 1.000 V, and particularly preferably less than or equal to 900 V. Further advantageously, low-voltage can be less than or equal to 600 V, preferably less than or equal to 240 V, and particularly preferably less than or equal to 220 V.

Preferably, voltage levels can be defined according to IEC 60038.

An "electrode" is an electrical conductor used to make contact with a part of a circuit, particularly an electric arc furnace, an electric reduction furnace or a submerged arc-resistance furnace circuit, in particular a nonmetallic part of a circuit. In the case of an electric arc furnace, an electric reduction furnace or a submerged arc-resistance furnace, the nonmetallic part of the circuit can correspond to the atmosphere in the electric arc furnace, the electric reduction furnace or the submerged arc-resistance furnace.

An electrode can be produced from high density graphite and/or Wolfram. An electrode may be designed to transfer electrical energy forming arcs between tip and charge material. An electrode can be a prebaked electrode or a self-baking electrode (Soederberg electrode) and/or an extrusion/composite electrode, which is a combination of a Soederberg electrode with a prebaked electrode as a core and/or a hollow electrode system, which allows charging of fines via the center hole (prebaked, self-baking), whereby the selection of the type of electrode can depend on: size of the electrode, produced material/metallurgy, and economic aspects such as operational costs.

An electrode of an electric arc furnace, an electric reduction furnace or a submerged arc-resistance furnace may be located at the top of an electric arc furnace, an electric reduction furnace or a submerged arc-resistance furnace. Preferably, an electrode located at the top is connected to a height adjustment means, whereby the distance of the electrode to the designated scrap and/or designated molten metal in the electric arc furnace or a submerged arc-resistance furnace can be varied. Such variation can be controlled and/or regulated by an electrode regulator.

A second electrode may be disposed in a furnace vessel of an electric arc furnace, an electric reduction furnace or a submerged arc-resistance furnace or may be a component of the inner wall of the furnace vessel.

The second electrode may also be arranged at the top of the electric arc furnace, the electric reduction furnace or the submerged arc-resistance furnace and preferably also be connected to a height adjustment means.

An electric arc furnace, an electric reduction furnace or a submerged arc-resistance furnace may also have three, four or more electrodes. Each electrode may be connected to a height adjustment means.

An electric arc furnace, an electric reduction furnace or a submerged arc-resistance furnace can be operated by means of direct current (DC) or by means of alternating current (AC).

In an electric arc furnace, an electric reduction furnace or a submerged arc-resistance furnace operated by direct current, the electrodes may be referred to as anode and cathode. A cathode may be arranged at the top of the furnace. An anode can be divided into several segments. An anode, preferably a bottom electrode, comprises metallic and/or conductive material in the bottom of a furnace and arcs are formed between the charge material and the cathode from the top, preferably a cathode made of graphite or carbon, or wolfram.

An electric arc furnace, an electric reduction furnace or a submerged arc-resistance furnace operated by means of alternating current can be powered by a one-phase electrical power supply or a polyphase electrical power supply, in particular a three-phase electrical power supply.

An "AC/DC converter circuit" is an electrical device that converts an alternating current into a direct current.

An AC/DC converter circuit can provide a DC voltage level at a DC side of the AC/DC converter circuit that is greater than or equal to the root mean square (RMS) value of an AC voltage level at an AC side of the AC/DC converter circuit preferably greater than or equal to the root mean square value of an AC voltage level at an AC side of the AC/DC converter circuit multiplied by the square root of 2.

An AC/DC converter circuit can provide a DC voltage level at a DC side of the AC/DC converter circuit that is greater than or equal to 0.1 times the root mean square value of an AC voltage level at an AC side of the AC/DC converter circuit, preferably greater than or equal to 0.2 times the root mean square value and particularly preferably greater than or equal to 0.5 times the root mean square value.

An AC/DC converter circuit can provide a DC voltage level at a DC side of the AC/DC converter circuit that is greater than or equal to 1.0 times the root mean square value of an AC voltage level at an AC side of the AC/DC converter circuit, preferably greater than or equal to 1.5 times the root mean square value, particularly preferably greater than or equal to 2 times the root mean square value and especially preferred greater than or equal to 3 times the root mean square value.

An AC/DC converter circuit may comprise at least one AC/DC converter unit. An "AC/DC converter unit" is an electrical device that converts an alternating current into a direct current.

An AC/DC converter unit may be an integral component. An AC/DC converter unit may comprise at least one circuit board.

An AC/DC converter circuit may comprise a plurality of AC/DC converter units connected in parallel to each other. In this way, the upper current limit of the AC/DC converter circuit can be increased.

An AC/DC converter circuit may comprise a plurality of AC/DC converter units connected in series to each other. In this way, the upper voltage limit of the AC/DC converter circuit can be increased.

An AC/DC converter circuit may comprise an AC/DC-housing. The AC/DC-housing is a housing in the context of this invention.

A "housing" in the context of this invention is designed to protect the designated components inside from external influences, in particular from mechanical and/or electrical influences. Furthermore, a housing can be provided with an electrical ground connection so that the housing can increase the safety for personnel in the vicinity of the electrical components enclosed by the housing in a designated manner.

A housing can comprises a bottom part, a top part and at least one side part. The bottom part, the top part and at least one side part can limit a housing volume at least partially. The bottom part, the top part and at least one side part may be connected to each other forming an integral component.

The AC/DC-housing may be configured to accommodate at least one AC/DC converter unit in the housing volume, preferably a plurality of AC/DC converter units.

An AC/DC converter circuit may be an integral component. The AC/DC converter circuit may comprise at least one circuit board.

Two parts forming an "integral component" in the context of this invention are interconnected with each other by means of at least one mechanical connection. In other words, two parts forming an integral component change their relative spatial position to each other within the limits of their mechanical connection when the integral component is moved from one spatial position to another spatial position.

In a preferred embodiment of the invention, the mechanical connection of an integral component is fixed. In other words, the relative position of two parts forming an integral component, wherein the mechanical connection between the two parts is fixed, is constant during change of a spatial position of the integral component.

An AC/DC converter unit may comprise a unit-housing. A unit-housing may be a housing in the context of this invention.

The plurality of AC/DC converter units connected in parallel and/or in series to each other may be disposed in the housing volume of an AC/DC-housing. In this way, the AC/DC converter circuit can be formed as an integral component. In this way, the AC/DC converter circuit can be exchanged for maintenance or repair in an easier way. Further, individual AC/DC converter units can be exchanged from the AC/DC converter circuit for maintenance or repair in an easier way resulting in an increased modularity of the AC/DC converter circuit.

An AC/DC converter circuit and/or an AC/DC converter unit may comprise at least one capacitor and/or at least one inductor to store electric energy. In this way, a separation between a three phase power network and at least one electrode can be created.

An AC/DC converter circuit and/or an AC/DC converter unit may comprise at least one half H-bridge circuit. An H-bridge circuit is an electronic circuit that converts direct current into alternating current. A half H-bridge comprises two switching elements. A full H-bridge comprises four switching elements.

The upper voltage limit of the half H-bridge circuit can be greater than or equal to 0.5 kV, preferably greater than or equal to 1.0 kV particularly preferably greater than or equal to 1.5 kV.

An AC/DC converter circuit and/or an AC/DC converter unit may comprise at least one full H-bridge circuit. The upper voltage limit of the full H-bridge circuit can be greater than or equal to 0.5 kV, preferably greater than or equal to 1.0 kV particularly preferably greater than or equal to 1.5 kV.

An AC/DC converter circuit and/or an AC/DC converter unit may comprise a plurality of full H-bridge circuits and/or half H-bridge circuits connected in series to each other. In this way, the upper voltage limit of the AC/DC converter circuit and/or the AC/DC converter unit can be increased.

An AC/DC converter circuit and/or an AC/DC converter unit may comprise a plurality of full H-bridge circuits and/or half H-bridge circuits connected in parallel to each other. In this way, the upper current limit of the AC/DC converter circuit and/or the AC/DC converter unit can be increased.

The upper current limit of an AC/DC converter circuit and/or an AC/DC converter unit can be greater than or equal to 750 A, preferably greater than or equal to 1500 A, preferred greater than or equal to 2000 A, particularly preferred greater than or equal to 2500 A and especially preferred greater than or equal to 3000 A.

An AC/DC converter circuit may comprise exactly one AC/DC converter unit.

An AC/DC converter circuit may be configured to rectify an alternating current of at least one phase of the three phase power network, wherein the three phase power network is a high-voltage three phase power network or a medium-voltage three phase power network or a low-voltage three phase power network.

An AC/DC converter circuit may be configured to rectify an alternating current of all phases of the three phase power network.

An AC/DC converter circuit may be indirectly connectable to the three phase power network. In other words, further components may be interposed between the AC/DC converter circuit and the three phase power network. Further components may comprise but are not limited to one or more transformers, one or more capacitors, one or more inductors and the like.

An AC/DC converter circuit may be directly connectable to the three phase power network. In other words, less than one component may be interposed between the AC/DC converter circuit and the three phase power network besides one or more power cables for the transport of electrical energy.

An AC/DC converter circuit and/or an AC/DC converter unit can have a switching frequency higher than or equal to 1 kHz, preferably higher than or equal to 2 kHz and particularly preferably higher than or equal to 5 kHz. Advantageously, an AC/DC converter circuit and/or an AC/DC converter unit can have a switching frequency higher than or equal to 10 kHz, preferably higher than or equal to 15 kHz and particularly preferably higher than or equal to 20 kHz. In this way an instantaneous power factor correction can be achieved improving the power factor. Such a power factor correction can also be addressed as dynamic power factor correction (DPFC).

An AC/DC converter circuit and/or an AC/DC converter unit may provide a six-impulse modulation and/or any multiple of a six-impulse modulation, that is a twelve-impulse modulation or an eighteen-impulse modulation or the like. In this way, THD may be reduced considerably, since harmonics higher than the fundamental are reduced significantly.

A "DC/DC converter circuit" is an electrical device that converts a direct current with a first voltage level into a direct current with a second voltage level.

A "first voltage level" in the context of this invention is the voltage level of a current entering a DC/DC converter circuit in the direction of electrical energy transport of that current. The current entering the DC/DC converter circuit may transport electrical energy from a three phase power network and/or another DC power source to a load or from a load to a three phase power network and/or another DC power source.

A "second voltage level" in the context of this invention is the voltage level of a current exiting a DC/DC converter circuit in the direction of electrical energy transport of that current. The current exiting the DC/DC converter circuit may transport electrical energy from a three phase power network and/or another DC power source to a load or from a load to a three phase power network and/or another DC power source.

A first voltage level may be higher or lower than a second voltage level. Alternatively, a first voltage level may be equal to a second voltage level.

A DC/DC converter circuit can be configured to provide a constant second voltage level. The constant second voltage level can vary from a nominal second voltage level by a degree of less than or equal to 80 % or less than or equal to 60 % or less than or equal to 50 % or less than or equal to 40 % or less than or equal to 30 % or less than or equal to 20 % or less than or equal to 15 % or less than or equal to 10 % or less than or equal to 5 %. The voltage variations can be measured as a given number of mean voltage values of a predetermined time interval, that must lie within a specified range around the nominal voltage level. For instance, for a 20 % deviation of the second voltage level from a specified nominal voltage level, 95 % of the 1-minute mean values of measured voltage values of an hourly interval must be within the limits of a 20 % deviation from the nominal voltage level. The time interval can be varied. The required given number of mean voltage values can be varied. Alternatively, or additionally the voltage variations can be measured according to one of the measuring principles form DIN EN 50160, DIN EN 61000-2-2 or DIN EN 61000-2-4 or any other Norm, that suits the field of application.

A DC/DC converter circuit may comprise at least one DC/DC converter unit. A "DC/DC converter unit" is an electrical device that converts a direct current with a first voltage level into a direct current with a second voltage level.

A DC/DC converter unit may comprise a unit-housing. A DC/DC converter unit may be an integral component. A DC/DC converter unit may comprise a circuit board.

A DC/DC converter circuit may comprise a DC/DC-housing. The DC/DC-housing is a housing in the context of the invention. The DC/DC-housing may be configured to accommodate at least one DC/DC converter unit in the housing volume.

A DC/DC converter circuit may be an integral component. A DC/DC converter circuit may comprise a circuit board.

A DC/DC converter circuit may comprise a plurality of DC/DC converter units connected in parallel to each other. In this way, an upper current limit of the DC/DC converter circuit can be increased.

A DC/DC converter circuit may comprise a plurality of DC/DC converter units connected in series to each other. In this way, the upper voltage limit of the DC/DC converter circuit can be increased.

The plurality of DC/DC converter units connected in parallel and/or in series to each other may be disposed in the housing volume of a DC/DC-housing of a DC/DC converter circuit. In this way, the DC/DC converter circuit can be formed as one integral component that can be exchanged for maintenance or repair in an easier way. Further, individual DC/DC converter units can be exchanged from the DC/DC converter circuit for maintenance or repair in an easier way resulting in an increased modularity of the DC/DC converter circuit.

A DC/DC converter circuit and/or a DC/DC converter unit may comprise at least one capacitor and/or at least one inductor to store electric energy and smooth a current and/or voltage with a second voltage level. Smoothing a current reduces higher order harmonics from a current.

A DC/DC converter circuit and/or a DC/DC converter unit may comprise at least one half H-bridge circuit. The upper voltage limit of the half H-bridge circuit can be greater than or equal to 0.5 kV, preferably greater than or equal to 1.0 kV particularly preferably greater than or equal to 1.5 kV.

A DC/DC converter circuit and/or a DC/DC converter unit may comprise at least one full H-bridge circuit. The upper voltage limit of the full H-bridge circuit can be greater than or equal to 0.5 kV, preferably greater than or equal to 1.0 kV particularly preferably greater than or equal to 1.5 kV.

A DC/DC converter circuit and/or a DC/DC converter unit may comprise a plurality of full H-bridge circuits and/or half H-bridge circuits connected in series to each other. In this way, the upper voltage limit of the DC/DC converter unit can be increased.

A DC/DC converter circuit and/or a DC/DC converter unit may comprise a plurality of full H-bridge circuits and/or half H-bridge circuits connected in parallel to each other. In this way, the upper current limit of the DC/DC converter unit can be increased.

A DC/DC converter circuit may comprise exactly one DC/DC converter unit.

A DC/DC converter circuit may be configured to handle a voltage level higher than or equal to 300 VDC, preferably a voltage level higher than or equal to 500 VDC and particularly preferred a voltage level higher than or equal to 800 VDC. In a preferred embodiment a DC/DC converter circuit may be configured to handle a voltage level higher than or equal to 1000 VDC, preferably a voltage level higher than or equal to 1500 VDC and particularly preferred a voltage level higher than or equal to 2000 VDC.

According to a preferred embodiment, the furnace power supply apparatus comprises less than one transformer, preferably less than one step-down transformer, arranged between the three phase power network and at least one electrode.

Omitting a transformer, preferably a step-down transformer, can further increase the efficiency of the system and reduce the overall costs. The presence of current harmonics in a transformer may result in larger eddy currents in the magnetic core of the transformer. Eddy current losses typically lower the efficiency of the transformer.

The furnace power supply apparatus may comprise less than one transformer, preferably less than one step-down transformer, arranged between the three phase power network and at least one AC/DC converter circuit.

The furnace power supply apparatus may comprise less than one transformer arranged between at least one AC/DC converter circuit and at least one electrode.

The furnace power supply apparatus may comprise less than one transformer arranged between at least one DC/DC converter circuit and at least one electrode.

The furnace power supply apparatus may comprise less than one transformer arranged between at least one DC/AC converter circuit and at least one electrode.

According to a preferred embodiment, the AC/DC converter circuit comprises at least one bidirectional AC/DC converter unit, preferably an active front-end circuit.

A "bidirectional" AC/DC converter unit allows electric energy to flow essentially in both directions, that means, electric energy can flow from a three phase power network and/or other DC power sources to a load and from a load to a three phase power network and/or other DC power sources. In this way the power factor of the furnace power supply apparatus can be increased since the AC/DC converter can supply or compensate reactive power instantaneously.

An "active front-end circuit" comprises controllable semiconductor elements, preferably Insulated-Gate Bipolar Transistors (IGBT).

An AC/DC converter circuit may comprise exactly one AC/DC converter unit, preferably an active front-end circuit, wherein the AC/DC converter circuit and the AC/DC converter unit form an integral component.

At least one DC/DC converter circuit comprises at least one bidirectional DC/DC converter unit.

A "bidirectional" DC/DC converter unit allows electric energy to flow essentially in both directions, that means, electric energy can flow from a three phase power network and/or other DC power sources to a load and from a load to a three phase power network and/or other DC power sources.

According to a preferred embodiment, at least one DC/DC converter circuit comprises at least one galvanically isolated DC/DC converter unit.

A "galvanic isolation" is the avoidance of electrical conduction between two electrical circuits between which power or signals are to be exchanged. The two circuits can be separated by electrically non-conductive coupling elements. In the case of galvanic isolation, the electrical potentials are separated from each other and the circuits are then potential-free between each other. In this way, propagation of ground faults can be prevented.

Galvanic isolation can be achieved by a plurality of means, such as magnetic flux and/or optical means, preferably light.

A transformer can be used as galvanic isolation.

The at least one DC/DC converter circuit, comprising at least one galvanically isolated DC/DC converter unit, can create a galvanic isolation between an AC/DC converter circuit and the at least one electrode when the furnace power supply apparatus is connected to an electric arc furnace, an electric reduction furnace or a submerged arc-resistance furnace. In this way, propagation of ground faults can be prevented, particularly without using additional transformers within the furnace power supply apparatus and/or connected to the furnace power supply apparatus.

According to a preferred embodiment, at least one DC/DC converter circuit comprises at least one switching DC/DC converter unit.

A "switching DC/DC converter unit" converts one DC voltage level to another DC voltage level, which may be higher or lower, by storing energy temporarily and then releasing that energy at a different voltage level. In this way efficiency of power conversion can be increased, particularly in comparison to non-switching DC/DC converter units.

A DC/DC converter circuit and/or a DC/DC converter unit can have a switching frequency higher than or equal to 1 kHz, preferably higher than or equal to 2 kHz and particularly preferably higher than or equal to 5 kHz. Advantageously, a DC/DC converter circuit and/or a DC/DC converter unit can have a switching frequency higher than or equal to 10 kHz, preferably higher than or equal to 15 kHz and particularly preferably higher than or equal to 20 kHz. In this way the power factor can be improved instantaneously.

According to a preferred embodiment, at least one first buffer circuit in direct current is interposed between the AC/DC converter circuit and the DC/DC converter circuit connecting the AC/DC converter circuit and the DC/DC converter circuit, wherein the first buffer circuit is configured to store energy and create a separation between the three phase power network and the at least one electrode.

A "first buffer circuit" is an electrical circuit transmitting and/or storing electrical energy.

A first buffer circuit can create a separation between a three phase power network and the at least one electrode. A separation may be an electrical separation through electrical energy stored in the first buffer circuit. The electrical energy stored in the first buffer circuit can absorb fluctuations, particularly instantaneous fluctuations, in electrical energy supply and/or demand. If, for example, there is a drop in electrical energy demand of an electrical load directly or indirectly connected to the first buffer circuit, the first buffer circuit can store excess electrical energy supply, preferably excess electrical energy supply supplied from a three phase power network connected to the first buffer circuit. If, for example, there is a drop in electrical energy supply, preferably electrical energy supply of a three phase power network connected to the first buffer circuit, the first buffer circuit can supply an electrical load connected directly or indirectly to the first buffer circuit with electrical energy from the stored electrical energy in the first buffer circuit. In other words, a first buffer circuit can create an electrical decoupling between the three phase power network and the at least one electrode. In this way, impact, particularly negative impact, of fluctuations in electrical energy supply from a three phase power network on the at least one electrode can be reduced.

A first buffer circuit may comprise at least one capacitor configured to store energy. A first buffer circuit may comprise a plurality of capacitors connected in parallel and/or series to each other. In this way an improved separation between the three phase power network and the at least one electrode can be achieved.

A first buffer circuit may comprise at least one inductor configured to store energy. A first buffer circuit may comprise a plurality of inductors connected in parallel and/or series to each other. In this way an improved separation between the three phase power network and the at least one electrode can be achieved.

A first buffer circuit may comprise at least one battery configured to store energy. A first buffer circuit may comprise a plurality of batteries connected in parallel and/or series to each other. In this way an improved separation between the three phase power network and the at least one electrode can be achieved.

A first buffer circuit may create a separation between an AC/DC converter circuit and a DC/DC converter circuit.

A first buffer circuit may have a voltage level higher than or equal to 1 kV, preferably a voltage level higher than or equal to 10 kV, particularly preferably a voltage level higher than or equal to 100 kV and especially preferred a voltage level higher than or equal to 150 kV. Advantageously, a first buffer circuit may have a voltage level higher than or equal to 300 kV, preferably a voltage level higher than or equal to 500 kV, particularly preferably a voltage level higher than or equal to 900 kV and especially preferred a voltage level higher than or equal to 1500 kV. The first buffer circuit may also be referred to as HV DC link. In this way, the first buffer circuit may provide an increased power supply to the at least one electrode.

A first buffer circuit voltage level can depend on an AC voltage level of the AC voltage at the alternating current side of an AC/DC converter circuit. A first buffer circuit voltage level can be regulated, preferably by an electronic control unit.

According to a preferred embodiment, at least one DC power source, preferably a renewable DC power source, is connectable to the first buffer circuit.

A "DC power source" is an electrical device, that provides a direct current (DC).

A DC power source can be a renewable DC power source like a wind turbine and/or a wind turbine power plant and/or a solar power plant and/or a geothermal power plant and/or a wave power plant. A DC power source can be a battery.

A DC power source can be other power plant types that at least indirectly provide a DC power e.g. nuclear power plants, coal power plants, gas-powered power plants and/or oil-powered power plants.

A DC power source can be connectable at least indirectly to a first buffer circuit and/or to a plurality of first buffer circuits. In this way, a stable energy supply for the furnace power supply apparatus can be provided even in the case of disturbances and/or failures in the three phase power network.

Alternatively or in addition, a DC power source can be connectable at least indirectly to a second buffer circuit and/or a plurality of second buffer circuits. In this way, a stable energy supply for the furnace power supply apparatus can be provided even in the case of disturbances and/or failures in the three phase power network and/or a DC power source connected to at least one first buffer circuit.

The DC power source can provide, directly or indirectly, a voltage level of essentially the same voltage level as the first buffer circuit. In this way, electrical energy can be supplied with less disturbances to the first buffer circuit.

A DC power source can be indirectly connected to a first buffer circuit and/or to a second buffer circuit via one or more DC/DC converter circuits configured to provide a first voltage level and/or a second voltage level matching the voltage level of the DC power source and/or the first buffer circuit and/or the second buffer circuit depending on the direction of electrical energy transport. In other words, in case of electrical energy flowing from a DC power source to a first buffer circuit and/or a second buffer circuit, the DC/DC converter circuit can process a first voltage level of essentially the same voltage level provided by the DC power source and provide a second voltage level of essentially the voltage level of the first buffer circuit and/or the second buffer circuit. In case of electrical energy flowing from a first buffer circuit and/or a second buffer circuit to a DC power source, the DC/DC converter circuit can process a first voltage level of essentially the same voltage level provided by the first buffer circuit and/or the second buffer circuit and provide a second voltage level of essentially the voltage level of the DC power source.

At least one AC/DC converter circuit can be connectable to a plurality of three phase power networks. In this way, a stable energy supply for the furnace power supply apparatus can be provided even in the case of disturbances and/or failures in one of the three phase power networks.

According to a preferred embodiment, the furnace power supply apparatus comprises a plurality of AC/DC converter circuits connected in parallel to each other, wherein the AC/DC converter circuits are connected to a common first buffer circuit, preferably to a plurality of first buffer circuits.

The plurality of first buffer circuits may be connected in parallel to each other.

The plurality of AC/DC converter circuits and the plurality of first buffer circuits may be the same. In other words, the number of AC/DC converter circuits and the number of first buffer circuits may be the same. Each first buffer circuit may be interposed between one AC/DC converter circuit and one DC/DC converter circuit establishing an one to one connection of exactly one AC/DC converter circuit and exactly one DC/DC converter circuit. An one to one connection means, that one AC/DC converter circuit is connected to only one DC/DC converter circuit and one DC/DC converter circuit is connected to only one AC/DC converter circuit. In this way, even if one AC/DC converter circuit or one DC/DC converter circuit switches off or has a malfunction, it is still possible to have an energy supply with the expected current level and/or voltage level and/or frequency.

In accordance with some embodiments of the invention a "common first buffer circuit" is connecting more than one AC/DC converter circuit with one or more DC/DC converter circuits.

In accordance with some embodiments of the invention a common first buffer circuit is connecting one AC/DC converter circuit with more than one DC/DC converter circuit.

A common first buffer circuit can transport electric energy between a plurality of AC/DC converters and/or a plurality of DC/DC converters and thus allows to transport a high amount of energy while at the same time realizing a constant current level and keeping installation cost low.

Preferably, the common first buffer circuit may have a voltage level higher than or equal to 1 kV, preferably a voltage level higher than or equal to 36 kV and particularly preferably a voltage level higher than or equal to 100 kV. Advantageously, a common first buffer circuit may have a voltage level higher than or equal to 300 kV, preferably a voltage level higher than or equal to 500 kV, particularly preferably a voltage level higher than or equal to 900 kV and especially preferred a voltage level higher than or equal to 1500 kV.

According to a preferred embodiment, at least one second buffer circuit in direct current is interposed between the DC/DC converter circuit and the at least one electrode connecting the DC/DC converter circuit and the at least one electrode at least indirectly, wherein the second buffer circuit is configured to store energy and create a separation between the three phase power network and the at least one electrode.

A "second buffer circuit" is an electrical circuit transmitting and/or storing electrical energy.

A second buffer circuit can create a separation between a DC/DC converter circuit and the at least one electrode. A separation may be an electrical separation through electrical energy stored in the second buffer circuit. The electrical energy stored in the second buffer circuit can absorb fluctuations, particularly instantaneous fluctuations, in electrical energy supply and/or demand. In other words, a second buffer circuit can create an electrical decoupling between a DC/DC converter circuit and the at least one electrode. In this way, impact, particularly negative impact, of fluctuations in electrical energy supply from a DC/DC converter circuit on the at least one electrode can be reduced.

A second buffer circuit may comprise at least one capacitor configured to store energy. A second buffer circuit may comprise a plurality of capacitors connected in parallel and/or series to each other. In this way an improved separation between the three phase power network and the at least one electrode can be achieved.

A second buffer circuit may comprise at least one inductor configured to store energy. A second buffer circuit may comprise a plurality of inductors connected in parallel and/or series to each other. In this way an improved separation between the three phase power network and the at least one electrode can be achieved.

A second buffer circuit may comprise at least one battery connected in series and/or in parallel to the second buffer circuit and configured to store energy. A second buffer circuit may comprise a plurality of batteries connected in parallel and/or series to each other and/or to the second buffer circuit. In this way an improved separation between the three phase power network and the at least one electrode can be achieved.

A second buffer circuit may have a voltage level less than or equal to 1500 kV, preferably a voltage level higher less than or equal to 900 kV, particularly preferably a voltage level less than or equal to 500 kV and especially preferred a voltage level less than or equal to 300 kV. Advantageously, a second buffer circuit may have a voltage level less than or equal to 150 kV, preferably a voltage level less than or equal to 100 kV, particularly preferably a voltage level less than or equal to 10 kV and especially preferred a voltage level less than or equal to 1 kV. The second buffer circuit may also be referred to as DC link. In this way, the second buffer circuit may provide an increased power supply to the at least one electrode.

A second buffer circuit voltage level can depend on the DC voltage level of a first buffer circuit. The second buffer circuit voltage level can be lower than the first buffer circuit voltage level.

A second buffer circuit voltage level can be regulated, preferably by an electronic control unit.

According to a preferred embodiment, the furnace power supply apparatus comprises an electronic control unit, wherein the electronic control unit is connectable to the AC/DC converter circuit and configured to regulate an active power flow of the furnace power supply apparatus.

An "electronic control unit" is any electronic system, which is adapted to receive signals and/or to store signals and/or to process signals and/or to control or regulate a furnace power supply apparatus in dependence on at least one signal.

The furnace power supply apparatus can include one or more sensors to provide information about harmonic distortions and/or flicker and/or a ratio of active power flow and reactive power flow in the power network. The electronic control unit can be operatively connected to one or more such sensors and can receive sensor signals, process them, and use them to control or regulate the furnace power supply apparatus.

The electronic control unit may comprise a storing element configured to store sensor signals received by a plurality of sensors from the furnace power supply apparatus.

The electronic control unit may comprise a housing. The electronic control unit may be an integral component.

The electronic control unit may be connectable to a DC/DC converter circuit, particularly to a plurality of DC/DC converter circuits.

The electronic control unit can be configured to control or regulate an AC/DC converter circuit, in particular to reduce or prevent harmonic distortions and/or flicker, in particular to mitigate flicker, in the power network.

The electronic control unit can be configured to control or regulate an AC/DC converter circuit, in particular to optimize the ratio of active power flow and reactive power flow in the power network.

The electronic control unit can be configured to control or regulate a DC/DC converter circuit, in particular to reduce or prevent harmonic distortions and/or flicker, in particular to mitigate flicker, in the power network.

The electronic control unit can be configured to control or regulate a DC/DC converter circuit, in particular to realize constant second voltage level.

The electronic control unit can be adapted to control a current loop and/or a voltage loop and/or an impedance loop and/or an active power loop and/or an active power with hysteresis loop of the furnace power supply apparatus.

The electronic control unit may be connectable to a DC/AC converter circuit, particularly to a plurality of DC/AC converter circuits.

The electronic control unit may be connectable to a DC-chopper circuit, particularly to a plurality of DC-chopper circuits.

The electronic control unit can be configured to control or regulate a DC chopper circuit and/or a DC/AC converter circuit, in particular to reduce or prevent harmonic distortions and/or flicker, in particular to mitigate flicker, in the power network, in particular preferably by applying a pulse-width modulation strategy algorithm.

The electronic control unit may be connectable to a DC power source. The electronic control unit may be configured to control or regulate the DC power source, in particular to optimize the electrical energy transferred from the DC power source to at least one first buffer circuit and/or the electrical energy transferred from at least one first buffer circuit to the DC power source, particularly to increase efficiency of the electrical energy transfer.

The furnace power supply apparatus may comprise an electrode regulator, preferably a plurality of electrode regulators. The furnace power supply apparatus may comprise one electrode regulator per electrode. The furnace power supply apparatus may be connectable to an electrode regulator, preferably to a plurality of electrode regulators and particularly preferably to one electrode regulator per electrode.

An "electrode regulator" may be configured to control and/or regulate the position of an electrode. An electrode can be raised and lowered automatically by a height adjustment means, which can use either electric winch hoists, hydraulic cylinders, pneumatic cylinders or the like.

The electrode regulator can pursue different objectives individually or in combination, particularly maintaining approximately constant voltage and/or constant current and/or power input during the melting of the charge, even though scrap may move under the electrodes as it melts. A length of the arc can increase with increasing voltage supplied to the electric arc furnace, the electric reduction furnace or the submerged arc-resistance furnace.

The electrode regulator can be operatively connected to one or more electronic control units and can receive signals from that one or more electronic control units, process them, and use them to control or regulate height adjustment means of one or more electrodes of an electric arc furnace, an electric reduction furnace or a submerged arc-resistance furnace.

The electronic control unit can be connectable to an electronic coordination and regulation unit, wherein the electronic control unit is operatively connected to the at least one AC/DC converter circuit and/or the at least one DC/DC converter circuit and/or to the at least one DC/AC converter circuit and/or to the at least one DC-chopper circuit and adapted to regulate the active power flow of the furnace power supply apparatus.

An "electronic coordination and regulation unit" is any electronic system, which is adapted to communicate with one or more electronic control units. Preferably, the electronic coordination and regulation unit is adapted to communicate with one or more electrode regulators, in particular aiming to reduce harmonic distortion and/or reduce flicker, in particular to mitigate flicker, and/or improve power factor.

The electronic coordination and regulation unit may comprise a housing. The electronic coordination and regulation unit may be an integral component. The electronic coordination and regulation may comprise a storing element, configured to store a plurality of setpoint values.

The electronic coordination and regulation unit can be configured to take over a superordinate control or regulation of a connected electronic control unit and an electrode regulator of one or more furnace power supply apparatuses.

The electronic coordination and regulation unit can be configured to take over a superordinate control or regulation of the connected partial regulators in a system of furnace power supply apparatuses, in particular one or more connected electronic control units and/or one or more electrode regulators.

The electronic coordination and regulation unit may by operatively connected to an electronic control unit and/or an electrode regulator, preferably operatively connected to each electronic control unit and/or each electrode regulator.

The electronic coordination and regulation unit can control or regulate the voltage setpoint and/or the current setpoint of one or several furnace power supply apparatuses.

The electronic coordination and regulation unit can control or regulate the active power setpoint and/or the reactive power setpoint of one or several furnace power supply apparatuses.

The electronic coordination and regulation unit can control or regulate the frequency setpoint of one or several furnace power supply apparatuses. In particular, the electronic coordination and regulation unit can control a plurality of frequency setpoints for one or several furnace power supply apparatuses, preferably different frequency setpoint for different melting phases during operation of an electric arc furnace, an electric reduction furnace or a submerged arc-resistance furnace.

The electronic coordination and regulation unit can control or regulate the impedance or resistance setpoint of one or several furnace power supply apparatuses.

The electronic coordination and regulation unit can control or regulate the electrode height setpoint of one or several electrodes of one or several electric arc furnaces, electric reduction furnaces or submerged arc-resistance furnaces.

According to a preferred embodiment, the furnace power supply apparatus comprises at least one DC/AC converter circuit configured to supply electric energy to at least one electrode, wherein at least one DC/DC converter circuit is connected to at least one DC/AC converter circuit.

A "DC/AC converter circuit" is an electrical device that converts direct current into an alternating current.

A DC/AC converter circuit may comprise a DC/AC-housing. A DC/AC converter circuit may be an integral component. A DC/AC converter circuit may comprise a circuit board.

A DC/AC converter circuit may comprise at least one DC/AC converter unit. A "DC/AC converter unit" is an electrical device that converts a direct current into an alternating current.

A DC/AC converter unit may comprise a unit-housing. A DC/AC converter unit may be an integral component. A DC/AC converter unit may comprise a circuit board.

A DC/AC-housing may be configured to accommodate at least one DC/AC converter unit in the housing volume, preferably a plurality of DC/AC converter units.

A DC/AC converter circuit may comprise a plurality of DC/AC converter units connected in parallel to each other. In this way, the upper current limit of the DC/AC converter circuit can be increased.

A DC/AC converter circuit may comprise a plurality of DC/AC converter units connected in series to each other. In this way, the upper voltage limit of the DC/AC converter circuit can be increased.

The plurality of DC/AC converter units connected in parallel and/or in series to each other may be disposed in the housing volume of a DC/AC-housing. In this way, the DC/AC converter circuit can be formed as one integral component. In this way, the DC/AC converter circuit can be exchanged for maintenance or repair in an easier way. Further, individual DC/AC converter units can be exchanged from the DC/AC converter circuit for maintenance or repair in an easier way resulting in an increased modularity of the DC/AC converter circuit.

A DC/AC converter circuit may comprise two or more DC/AC converter units connected in parallel and/or series to each other, preferably four or more DC/AC converter units, especially preferred 10 or more DC/AC converter units. Advantageously, a DC/AC converter circuit may comprise 20 or more DC/AC converter units connected in parallel and/or in series to each other, preferably 30 or more DC/AC converter units and especially preferred 40 or more DC/AC converter units.

A DC/AC converter circuit and/or a DC/AC converter unit may comprise at least one capacitor and/or at least one inductor to store electric energy. In this way, a separation between a three phase power network and at least one electrode can be created.

A DC/AC converter circuit and/or a DC/AC converter unit may comprise at least one half H-bridge circuit. The upper voltage limit of the half H-bridge circuit can be greater than or equal to 0.5 kV, preferably greater than or equal to 1.0 kV particularly preferably greater than or equal to 1.5 kV.

A DC/AC converter circuit and/or a DC/AC converter unit may comprise at least one full H-bridge circuit. The upper voltage limit of the full H-bridge circuit can be greater than or equal to 0.5 kV, preferably greater than or equal to 1.0 kV particularly preferably greater than or equal to 1.5 kV.

A DC/AC converter circuit and/or a DC/AC converter unit may comprise a plurality of full H-bridge circuits and/or half H-bridge circuits connected in series to each other. In this way, the upper voltage limit of the DC/AC converter circuit and/or the DC/AC converter unit can be increased.

A DC/AC converter circuit and/or a DC/AC converter unit may comprise a plurality of full H-bridge circuits and/or half H-bridge circuits connected in parallel to each other. In this way, the upper current limit of the DC/AC converter circuit and/or the DC/AC converter unit can be increased.

The upper current limit of a DC/AC converter circuit and/or a DC/AC converter unit can be greater than or equal to 750 A, preferably greater than or equal to 1500 A, preferred greater than or equal to 2000 A, particularly preferred greater than or equal to 2500 A and especially preferred greater than or equal to 3000 A.

A DC/AC converter circuit may comprise exactly one DC/AC converter unit.

A DC/AC converter circuit and/or a DC/AC converter unit may have a switching frequency higher than or equal to 1 kHz, preferably higher than or equal to 2 kHz and particularly preferably higher than or equal to 5 kHz. Advantageously, a DC/AC converter circuit and/or a DC/AC converter unit may have a switching frequency higher than or equal to 10 kHz, preferably higher than or equal to 15 kHz and particularly preferably higher than or equal to 20 kHz. In this way an instantaneous power factor correction can be achieved improving the power factor. Such a power factor correction can also be addressed as dynamic power factor correction (DPFC).

A DC/AC converter circuit may be indirectly connectable to one or more electrodes. In other words, further components may be interposed between the DC/AC converter circuit and the one or more electrodes. Further components may comprise but are not limited to one or more transformers, one or more capacitors, one or more inductors and the like.

A DC/AC converter circuit may be directly connectable to one or more electrodes. In other words, less than one component may be interposed between the DC/AC converter circuit and the one or more electrodes besides one or more power cables for the transport of electrical energy.

A DC/AC converter circuit may be connectable to at least one electrode, preferably to a plurality of electrodes and configured to supply the electrode/the electrodes with electric energy.

A DC/AC converter circuit may be connectable to exactly one electrode and configured to supply this electrode with electric energy.

The furnace power supply apparatus may comprise a plurality of DC/AC converter circuits connected in parallel to each other, wherein each DC/AC converter circuit is configured to supply electric energy to one or more electrodes.

The furnace power supply apparatus may comprise a plurality of DC/AC converter circuits connected in parallel to each other, wherein the DC/AC converter circuits, which are connected in parallel to each other, are connectable to the same electrode and configured to supply electric energy to that same electrode. In this way, even if one DC/AC converter circuit switches off or has a malfunction, it is still possible to have an energy supply with the expected current level and/or voltage level and/or frequency.

According to a preferred embodiment, the furnace power supply apparatus comprises at least one DC chopper circuit configured to supply electric energy to at least one electrode, wherein at least one DC/DC converter circuit is connected to at least one DC chopper circuit.

A "DC chopper circuit" is an electrical device that converts a direct current with a fixed voltage to a direct current with a variable voltage directly.

Since a switching element in a DC chopper circuit and/or in a DC chopper unit is either fully on or fully off, its losses are low and a DC chopper circuit and/or a DC chopper unit can provide high efficiency, with a switching rate of higher than or equal to 1 kHz, preferably higher than or equal to 2 kHz and particularly preferably higher than or equal to 5 kHz. Advantageously, a DC chopper circuit and/or a DC copper unit may have a switching rate higher than or equal to 10 kHz, preferably higher than or equal to 15 kHz and particularly preferably higher than or equal to 20 kHz. In this way, an electric arc can advantageously be stabilized while the furnace power supply apparatus can at the same time be protected from a possible drift.

A DC chopper circuit may comprise a DC chopper-housing. A DC chopper circuit may be an integral component. A DC chopper circuit may comprise a circuit board.

A DC chopper circuit may comprise at least one DC chopper unit. A "DC chopper unit" is an electrical device that converts a direct current with a fixed voltage to a direct current with a variable voltage directly.

A DC chopper unit may comprise a unit-housing. A DC chopper unit may be an integral component. A DC chopper unit may comprise a circuit board.

A DC chopper-housing may be configured to accommodate at least one DC chopper unit in the housing volume, preferably a plurality of DC chopper units.

A DC chopper circuit may comprise a plurality of DC chopper units connected in parallel to each other. In this way, an upper current limit of the DC chopper circuit can be increased.

A DC chopper circuit may comprise a plurality of DC chopper units connected in series to each other. In this way, an upper voltage limit of the DC chopper circuit can be increased.

The plurality of DC chopper units connected in parallel and/or in series to each other may be disposed in the housing volume of a DC-chopper-housing. In this way, the DC chopper circuit can be formed as one integral component that can be exchanged for maintenance or repair in an easier way. Further, individual DC chopper units can be exchanged from the DC chopper circuit for maintenance or repair in an easier way resulting in an increased modularity of the DC chopper circuit.

A DC chopper circuit and/or a DC chopper unit may comprise at least one capacitor and/or at least one inductor to store electric energy. In this way, a separation between a three phase power network and at least one electrode can be created.

The upper current limit of a DC chopper circuit and/or a DC chopper unit can be greater than or equal to 750 A, preferably greater than or equal to 1500 A, preferred greater than or equal to 2000 A, particularly preferred greater than or equal to 2500 A and especially preferred greater than or equal to 3000 A.

A DC chopper circuit may comprise exactly one DC chopper unit.

A DC chopper circuit may be indirectly connectable to one or more electrodes. In other words, further components may be interposed between the DC chopper circuit and the one or more electrodes. Further components may comprise but are not limited to one or more capacitors, one or more inductors and the like.

A DC chopper circuit may be directly connectable to one or more electrodes. In other words, less than one component may be interposed between the DC chopper circuit and the one or more electrodes besides one or more power cables for the transport of electrical energy.

A DC chopper circuit may be connectable to at least one electrode, preferably to a plurality of electrodes and configured to supply the electrode/the electrodes with electric energy.

A DC chopper circuit may be connectable to exactly one electrode and configured to supply this electrode with electric energy.

The furnace power supply apparatus may comprise a plurality of DC chopper circuits connected in parallel to each other, wherein each DC chopper circuit is configured to supply one or more electrodes with electric energy.

The furnace power supply apparatus may comprise a plurality of DC chopper circuits connected in parallel to each other, wherein the DC chopper circuits, which are connected in parallel to each other, are connectable to the same electrode and configured to supply electric energy to that same electrode. In this way, even if one DC chopper circuit switches off or has a malfunction, it is still possible to have an energy supply with the expected current level and/or voltage level.

An AC/DC converter unit and/or a DC/DC converter unit and/or a DC/AC converter unit and/or a DC chopper unit may comprise at least one semiconductor element comprising silicon carbide, preferably a plurality of semiconductor elements.

A "semiconductor element" comprises an electrical conductivity value falling between that of a conductor, such as metallic copper, and an insulator, such as glass. A semiconductor element can be used for amplification, switching, and energy conversion.

A semiconductor element may be a diode, a thyristor such as a Silicon Controlled Rectifier (SCR), a Gate Turn-Off Thyristor (GTO), an Integrated Gate-Commutated Thyristor (IGCT), a Metal-Oxide Semiconductor Controlled Thyristor (MCT), a transistor such as a Bipolar Junction Transistor (BJT), a Metal-Oxide Semiconductor Field-Effect Transistor (MOSFET), an injection enhanced gate transistor (IEGT) or an Insulated-Gate Bipolar Transistor (IGBT) or other suitable semiconductor elements. A semiconductor element my comprise silicon and/or carbon, preferably silicon carbide (SiC).

A second buffer circuit in direct current may be interposed between a DC/DC converter circuit and a DC/AC converter circuit or between a DC/DC converter circuit and a DC chopper circuit. The second buffer circuit is configured to store energy and create a separation between a three phase power network and an electrode.

A second buffer circuit can create a separation between a DC/DC converter circuit and a DC/AC converter circuit or a DC chopper circuit. A separation may be an electrical separation through electrical energy stored in the second buffer circuit. The electrical energy stored in the second buffer circuit can absorb fluctuations, particularly instantaneous fluctuations, in electrical energy supply and/or demand. In other words, a second buffer circuit can create an electrical decoupling between a DC/DC converter circuit connected to the second buffer circuit and a DC/AC converter circuit or a DC chopper circuit. In this way, impact, particularly negative impact, of fluctuations in electrical energy supply on the DC/AC converter circuit or the DC chopper circuit can be reduced.

A second buffer circuit may create a separation between a DC/DC converter circuit and a DC/AC converter circuit or between a DC/DC converter circuit and a DC chopper circuit.

The furnace power supply apparatus may comprise a common second buffer circuit. A common second buffer circuit may connect a DC/DC converter circuit with more than one DC/AC converter circuits or more than one DC chopper circuits. Alternatively, a common second buffer circuit may connect more than one DC/DC converter circuits with one DC/AC converter circuit or one DC chopper circuit. A common second buffer circuit can transport electric energy between a plurality of DC/DC converters and/or a plurality of DC/AC converters and/or a plurality of DC chopper circuits and thus to transport a high amount of energy while at the same time realizing a constant the current level and keeping installation cost low.

The furnace power supply apparatus may comprise a plurality of second buffer circuits connected in parallel to each other.

The plurality of DC/DC converter circuits, the plurality of second buffer circuits and the plurality of DC/AC converter circuits or DC chopper circuits may be the same. In other words, the number of DC/DC converter circuits, the number of second buffer circuits and the number of DC/AC converter circuits or DC chopper circuits may be the same. Each second buffer circuit may be interposed between one DC/DC converter circuit and one DC/AC converter circuit or between one DC/DC converter circuit and one DC chopper circuit establishing an one to one connection of exactly one DC/DC converter circuit and exactly one DC/AC converter circuit or an one to one connection of exactly one DC/DC converter circuit and one DC chopper circuit forming a power submodule. In this way, even if one DC/DC converter circuit or one DC/AC converter circuit or one DC chopper circuit switches off or has a malfunction, it is still possible to have an energy supply with the expected current level and/or voltage level and/or frequency.

A power submodule may comprise a housing. A power submodule may be an integral component.

The furnace power supply apparatus may comprise a plurality of power submodules connected in parallel to each other. Each power submodule may be connectable to exactly one separate electrode creating an independent power supply for that electrode. In other words, there is a one to one allocation between one power submodule and one electrode.

According to a preferred embodiment of the furnace power supply apparatus an AC/DC converter circuit, a first buffer circuit, a DC/DC converter circuit, a second buffer circuit and a DC/AC converter circuit or a DC chopper circuit may form a power module.

A power module may comprise a housing. A power module may be an integral component.

Preferably, the furnace power supply apparatus comprises a plurality of power modules connected in parallel to each other. Each power module is connectable to exactly one separate electrode creating an independent power supply for each of the electrodes. In other words, there is a one to one allocation between one power module and one electrode. In this way, electrical disturbances of one electrode do not influence other electrodes.

According to a second aspect of the invention, the task is solved by a system for the supply of at least one electric arc furnace and/or electric reduction furnace and/or submerged arc-resistance furnace with electric energy,

- wherein the system is connectable to at least one three phase power network;
- wherein the system is connectable to at least one electrode of at least one electric arc furnace and/or electric reduction furnace and/or submerged arc-resistance furnace;

characterized by the following features:

- the system comprises a plurality of furnace power supply apparatuses according to the first aspect of the invention, and
- wherein the plurality of furnace power supply apparatuses are connected in parallel to each other.

It is understood that the advantages of a furnace power supply apparatus according to the first aspect of the invention, as described above, transfer directly to a system comprising a furnace power supply apparatus according to the first aspect of the invention.

The system may comprise an electrode regulator, preferably operatively connected to each electronic control unit and/or each height adjustment means.

The system may comprise an electronic coordination and regulation unit which is operatively connected to an electronic control unit and/or an electrode regulator, preferably operatively connected to each electronic control unit and/or each electrode regulator.

According to a third aspect of the invention, the task is solved by an electric arc furnace, electric reduction furnace or submerged arc-resistance furnace characterized in that the electric arc furnace, the electric reduction furnace or the submerged arc-resistance furnace comprises a furnace supply apparatus according to the first aspect of the invention and/or a system according to the second aspect of the invention.

An electric arc furnace, an electric reduction furnace or a submerged arc-resistance furnace may comprise a plurality of furnace power supply apparatuses according to the first aspect of the invention and/or a plurality of systems according to the second part of the invention. Each furnace power supply apparatus according to the first aspect of the invention and/or each system according to the second aspect of the invention is connectable to exactly one electrode and configured to supply a polyphase electric energy to that electrode. In this way, a stable energy supply for the electric arc furnace, the electric reduction furnace or the submerged arc-resistance furnace can be provided even in the case of disturbances and/or failures in one of the furnace power supply apparatuses and/or systems.

It is understood that the advantages of a furnace power supply apparatus according to the first aspect of the invention and/or a system for the supply of one or more electrodes of an electric arc furnace or an electric reduction furnace or a submerged arc-resistance furnace with electric energy according to the second aspect of the invention, as described above, transfer directly to an electric arc furnace, an electric reduction furnace or a submerged arc-resistance furnace comprising such a system according to the second aspect of the invention.

It should be noted that the subject-matter of the third aspect can be advantageously combined with the subject-matter of the preceding aspects of the invention, either individually or cumulatively in any combination.

Alternatively, an electric arc furnace, an electric reduction furnace or a submerged arc-resistance furnace may comprise a plurality of furnace power supply apparatuses according to the first aspect of the invention and/or a plurality of systems according to the second part of the invention. Each furnace power supply apparatus according to the first aspect of the invention and/or each system according to the second aspect of the invention is connectable to a plurality of electrodes and configured to supply a polyphase electric energy to that plurality of electrodes.

According to a fourth aspect of the invention, the task is solved by the use of a furnace power supply apparatus according to the first aspect of the invention to supply at least one electric arc furnace and/or electric reduction furnace and/or a submerged arc-resistance furnace with electric energy.

According to a fifth aspect of the invention, the task is solved by a method for operating an electric arc furnace or an electric reduction furnace or a submerged arc-resistance furnace, in particular an electric arc furnace, electric reduction furnace or a submerged arc-resistance furnace according to the third aspect of the invention, wherein the ratio of active power flow and reactive power flow is controlled and/or regulated by influencing a control quantity of an AC/DC converter circuit and/or of a DC/DC converter circuit and/or of a DC/AC converter circuit and/or of a DC chopper circuit, in particular the reactive power flow is minimized by influencing a control quantity of the AC/DC converter circuit and/or of a DC/AC converter circuit.

It is understood that the advantages of an electric arc furnace, an electric reduction furnace or a submerged arc-resistance furnace according to the third aspect of the invention, as described above, transfer directly to a method for operating an electric arc furnace, an electric reduction furnace or a submerged arc-resistance furnace according to the third aspect of the invention.

It should be noted that the subject-matter of the fifth aspect can be advantageously combined with the subject-matter of the preceding aspects of the invention, either individually or cumulatively in any combination.

Further advantages, details and features of the present invention are explained in the description of the following embodiments, thereby:

Figure 1: shows a schematic view of a first embodiment of a furnace power supply apparatus;

Figure 2: shows a schematic view of a second embodiment of a furnace power supply apparatus;

Figure 3: shows a schematic view of a third embodiment of a furnace power supply apparatus;

Figure 4: shows a schematic view of a fourth embodiment of a furnace power supply apparatus;

Figure 5: shows a schematic view of a fifth embodiment of a furnace power supply apparatus;

Figure 6: shows a schematic view of a sixth embodiment of a furnace power supply apparatus;

Figure 7: shows a schematic view of a first embodiment of a system for the supply an electric arc furnace, an electric reduction furnace or a submerged arc-resistance furnace with electric energy;

Figure 8: shows a schematic view of a second embodiment of a system for the supply an electric arc furnace, an electric reduction furnace or a submerged arc-resistance furnace with electric energy;

In the following description, same reference numerals describe same elements and same features, respectively, so that a description of one element conducted with reference to one figure is also valid for the other figures, so that repetition of the respective feature is omitted.

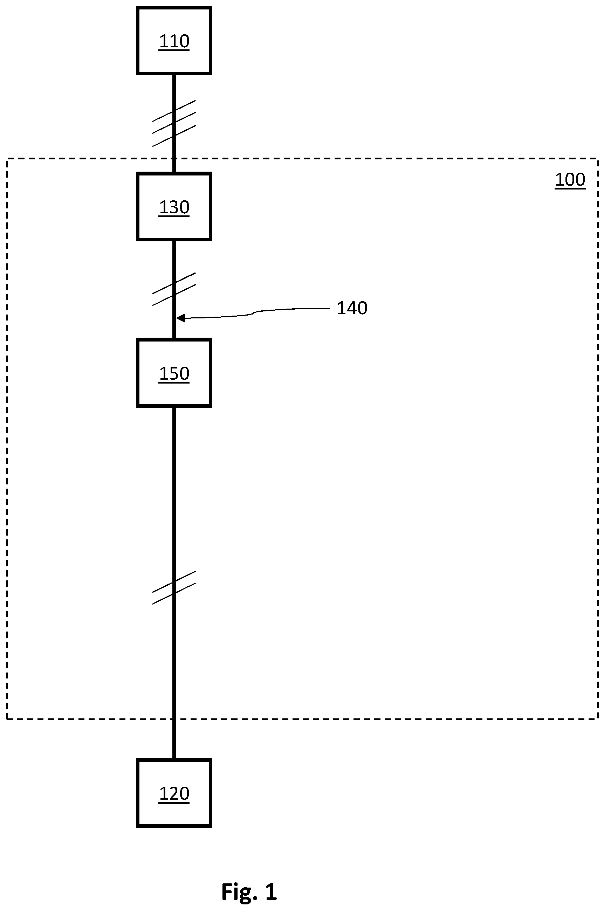

A furnace power supply apparatus 100 in Figure 1 comprises an AC/DC converter circuit 130 and a DC/DC converter circuit 150 connected to the direct current side of the AC/DC converter circuit 130.

The furnace power supply apparatus 100 is connectable to a three phase power network 110 and to an electrode 120.

The AC/DC converter circuit 130 is configured to rectify an alternating current of at least one phase of the three phase power network 110.

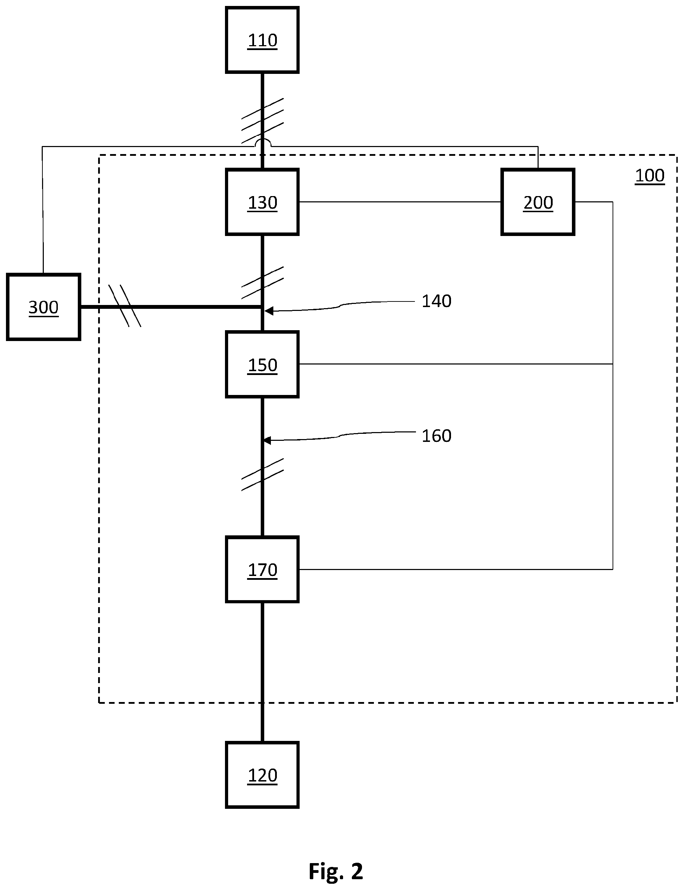

A furnace power supply apparatus 100 in Figure 2 further comprises a DC/AC converter circuit 170. This furnace power supply apparatus is intended to be used for an AC-powered electric arc furnace or electric reduction furnace or submerged arc-resistance furnace (not shown).

The furnace power supply apparatus 100 further comprises a first buffer circuit 140 in direct current interposed between the AC/DC converter circuit 130 and the DC/DC converter circuit 150 connecting the AC/DC converter circuit 130 and the DC/DC converter circuit 150. The first buffer circuit 140 can be configured to store energy and create a separation between the three phase power network 110 and the electrode 120.

The furnace power supply apparatus 100 further comprises an electronic control unit 200 connected to the AC/DC converter circuit 130. The electronic control unit 200 is configured to regulate an active power flow of the furnace power supply apparatus 100.

The electronic control unit 200 is connected to the DC/DC converter circuit 150 and configured to control or regulate the DC/DC converter circuit 150.

The electronic control unit 200 is connected to the DC/AC converter circuit 170 and configured to control or regulate the DC/AC converter circuit 170.

The furnace power supply apparatus 100 further is connectable to a DC power source 300. The DC power source 300 is connected to the first buffer circuit 140.

The electronic control unit 200 is connected to the DC power source 300 and configured to control and/or regulate the DC power source 300.

The furnace power supply apparatus 100 further comprises a second buffer circuit 160 in direct current interposed between the DC/DC converter circuit 150 and the DC/AC converter circuit 170. The second buffer circuit 160 is configured to store energy and create a separation between the three phase power network 110 and the electrode 120.

An alternative embodiment (not shown) to the embodiment of the furnace power supply apparatus 100 in Figure 2 comprises a DC chopper circuit 180 instead of a DC/AC converter circuit 170. This furnace power supply apparatus is intended to be used for a DC-powered electric arc furnace or electric reduction furnace or submerged arc-resistance furnace (not shown).

All other features of the embodiment of the furnace power supply apparatus according to Figure 2 apply to this alternative embodiment of the furnace power supply apparatus.

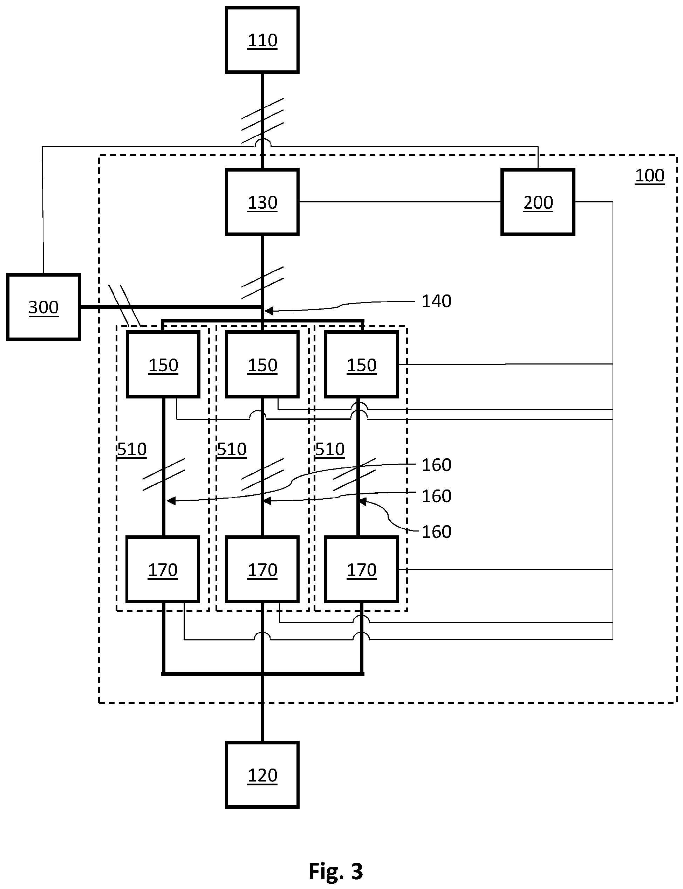

A furnace power supply apparatus 100 in Figure 3 comprises three DC/DC converter circuits 150 connected in parallel to each other. The DC/DC converter circuits 150 are connected via a common first buffer circuit 140 to the direct current side of the same AC/DC converter circuit 130.

The furnace power supply apparatus 100 further comprises three DC/AC converter circuits 170.

The DC/AC converter circuits 170 are connectable to the same electrode 120.

The electronic control unit 200 is connected to each of the DC/DC converter circuits 150. The electronic control unit 200 is configured to control or regulate each DC/DC converter circuit 150 separately allowing an independent control or regulation of each DC/DC converter circuit 150.

The electronic control unit 200 is connected to each of the DC/AC converter circuits 170. The electronic control unit 200 is configured to control or regulate each DC/AC converter circuit 170 separately allowing an independent control or regulation of each DC/AC converter circuit 170.

The furnace power supply apparatus 100 further comprises three second buffer circuits 160 in direct current. Each second buffer circuit 160 is interposed between one DC/DC converter circuit 150 and one DC/AC converter circuit 170, thereby forming three electrically separate power submodules 510. Each power submodule 510 comprises one DC/DC converter circuit 150, one DC/AC converter circuit 170 and one second buffer circuit 160 interposed between the one DC/DC converter circuit 150 and the one DC/AC converter circuit 170.

An alternative embodiment (not shown) to the embodiment of the furnace power supply apparatus 100 in Figure 3 comprises three DC chopper circuits 180 instead of three DC/AC converter circuits 170. This furnace power supply apparatus is intended to be used for a DC-powered electric arc furnace or electric reduction furnace or submerged arc-resistance furnace (not shown).

The alternative embodiment of the furnace power supply apparatus 100 further comprises three DC/DC converter circuits 150 connected in parallel to each other. The DC/DC converter circuits 150 are connected via a common first buffer circuit 140 to the direct current side of the same AC/DC converter circuit 130.

The DC chopper circuits 180 are connectable to the same electrode 120.

The electronic control unit 200 is connected to each of the DC/DC converter circuits 150. The electronic control unit 200 is configured to control or regulate each DC/DC converter circuit 150 separately allowing an independent control or regulation of each DC/DC converter circuit 150.

The electronic control unit 200 is connected to each of the DC chopper circuits 180. The electronic control unit 200 is configured to control or regulate each DC chopper circuit 180 separately allowing an independent control or regulation of each DC chopper circuit 180.

The alternative embodiment of the furnace power supply apparatus 100 further comprises three second buffer circuits 160 in direct current. Each second buffer circuit 160 is interposed between one DC/DC converter circuit 150 and one DC chopper circuit 180, thereby forming three electrically separate power submodules 510. Each power submodule 510 comprises one DC/DC converter circuit 150, one DC chopper circuit 180 and one second buffer circuit 160 interposed between the one DC/DC converter circuit 150 and the one DC chopper circuit 180.

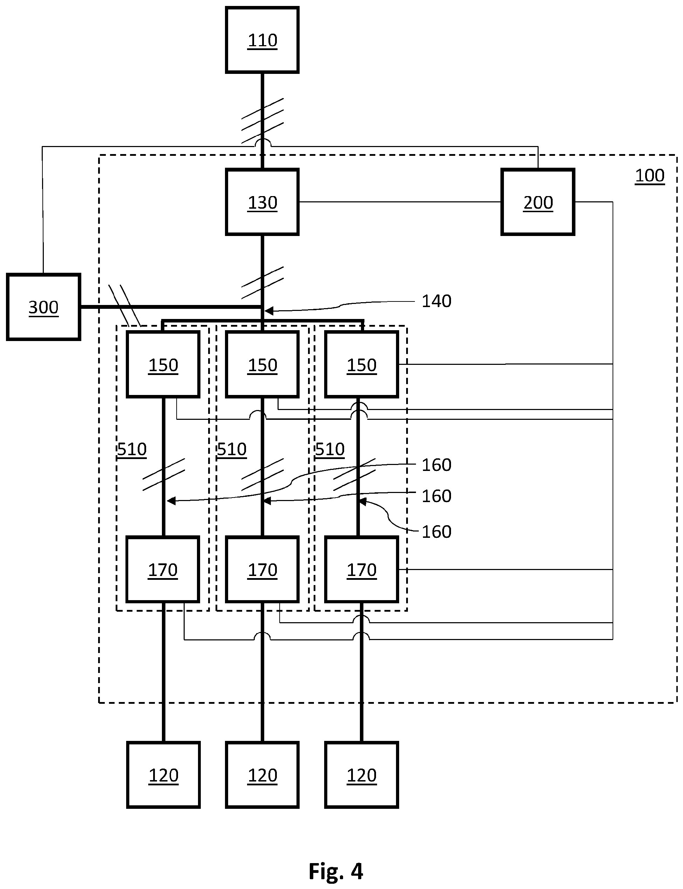

A furnace power supply apparatus 100 in Figure 4 is connectable to three electrodes 120. Each power submodule 510 is connectable to exactly one separate electrode 120 creating an independent power supply for each of the electrodes 120. In other words, there is a one to one allocation between one power submodule 510 and one electrode 120.

An alternative embodiment (not shown) to the embodiment of the furnace power supply apparatus 100 in Figure 4 is connectable to three electrodes 120. Each power submodule 510 comprises one DC chopper circuit 180 instead of the one DC/AC converter circuit 170. Each power submodule 510 is connectable to exactly one separate electrode 120 creating an independent power supply for each of the electrodes 120. In other words, there is a one to one allocation between one power submodule 510 and one electrode 120.

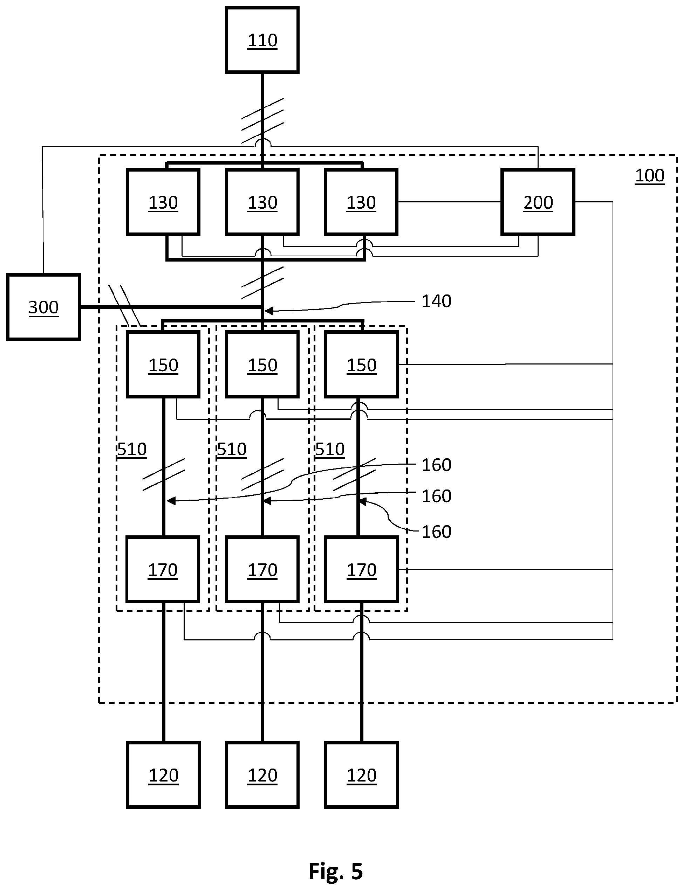

A furnace power supply apparatus 100 in Figure 5 comprises three AC/DC converter circuits 130 connected in parallel to each other. The AC/DC converter circuits 130 are connectable to a three phase power network 110.

The AC/DC converter circuits 130 are connected via a common first buffer circuit 140 to the DC/DC converter circuits 150.

The electronic control unit 200 is connected to each of the AC/DC converter circuits 130. The electronic control unit 200 is configured to control or regulate each AC/DC converter circuit 130 separately allowing an independent control or regulation of each AC/DC converter circuit 130. In this way an active power flow of the furnace power supply apparatus 100 can be regulated better.

In an alternative embodiment (not shown) to the embodiment of the furnace power supply apparatus 100 in Figure 5, the power submodules 510 comprise one DC chopper circuit 180 each instead of the one DC/AC converter circuit 170 each.

The alternative embodiment of the furnace power supply apparatus 100 comprises three AC/DC converter circuits 130 connected in parallel to each other. The AC/DC converter circuits 130 are connectable to a three phase power network 110.

The AC/DC converter circuits 130 are connected via a common first buffer circuit 140 to the DC/DC converter circuits 150.

The electronic control unit 200 is connected to each of the AC/DC converter circuits 130. The electronic control unit 200 is configured to control or regulate each AC/DC converter circuit 130 separately allowing an independent control or regulation of each AC/DC converter circuit 130. In this way an active power flow of the furnace power supply apparatus 100 can be regulated better.

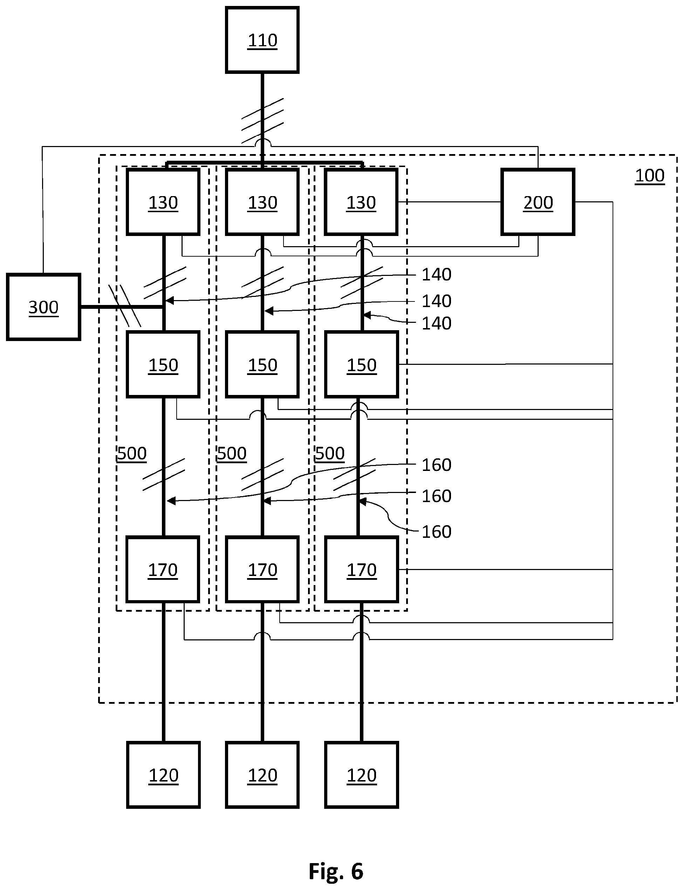

A furnace power supply apparatus 100 in Figure 6 comprises three first buffer circuits 140. Each first buffer circuit 140 is interposed between one AC/DC converter circuit 130 and one DC/DC converter circuit 150 establishing an one to one connection of exactly one AC/DC converter circuit 130 and exactly one DC/DC converter circuit 150.

An AC/DC converter circuit 130, a first buffer circuit 140, a DC/DC converter circuit 150, a second buffer circuit 160 and a DC/AC converter circuit 170 form a power module 500. The first buffer circuit 140 is interposed between the AC/DC converter circuit 130 and the DC/DC converter circuit 150. The second buffer circuit 160 is interposed between the DC/DC converter circuit 150 and the DC/AC converter circuit 170. The furnace power supply apparatus 100 thus comprises three power modules 500.

Each power module 500 is connectable to exactly one separate electrode 120 creating an independent power supply for each of the electrodes 120. In other words, there is a one to one allocation between one power module 500 and one electrode 120.

An alternative embodiment (not shown) to the furnace power supply apparatus 100 in Figure 6 comprises three first buffer circuits 140. Each first buffer circuit 140 is interposed between one AC/DC converter circuit 130 and one DC/DC converter circuit 150 establishing an one to one connection of exactly one AC/DC converter circuit 130 and exactly one DC/DC converter circuit 150.

An AC/DC converter circuit 130, a first buffer circuit 140, a DC/DC converter circuit 150, a second buffer circuit 160 and a DC chopper circuit 180 form a power module 500. The first buffer circuit 140 is interposed between the AC/DC converter circuit 130 and the DC/DC converter circuit 150. The second buffer circuit 160 is interposed between the DC/DC converter circuit 150 and the DC chopper circuit 180. The furnace power supply apparatus 100 thus comprises three power modules 500.

Each power module 500 is connectable to exactly one separate electrode 120 creating an independent power supply for each of the electrodes 120. In other words, there is a one to one allocation between one power module 500 and one electrode 120.

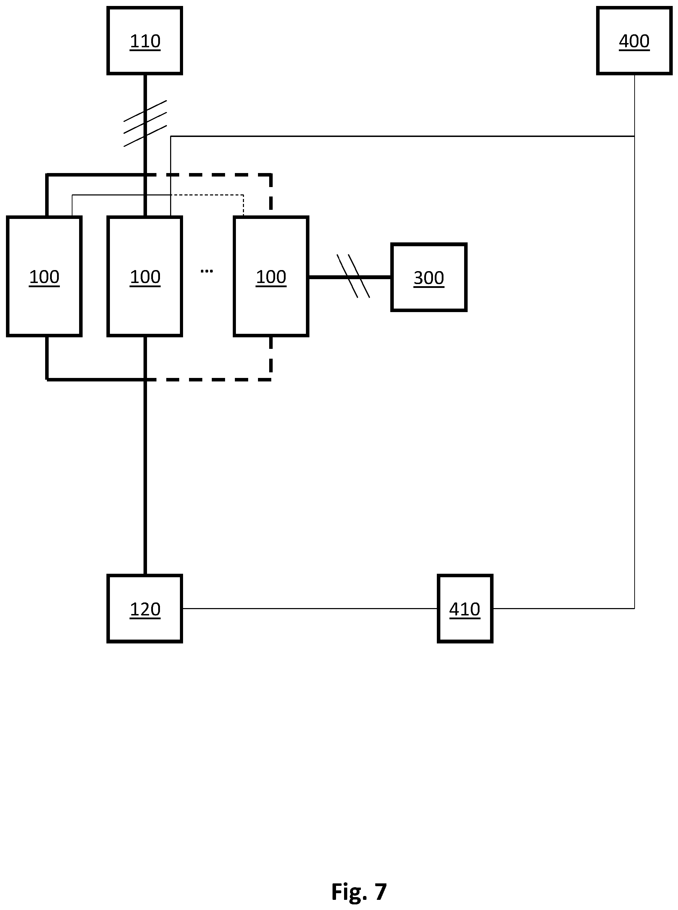

A system (not marked) for the supply of an electrode 120 of an electric arc furnace, an electric reduction furnace or a submerged arc-resistance furnace in Figure 7 comprises two or more furnace power supply apparatuses 100 connected in parallel to each other.

The system further comprises an electronic coordination and regulation unit 400. The electronic coordination and regulation unit 400 is connected to the furnace power supply apparatuses 100.

The system further comprises an electrode regulator 410 connectable to an electrode height adjustment means (not shown).

The electronic coordination and regulation unit 400 is configured to communicate with the electronic control units 200 of the furnace power supply apparatuses 100 and with the electrode regulator 410.

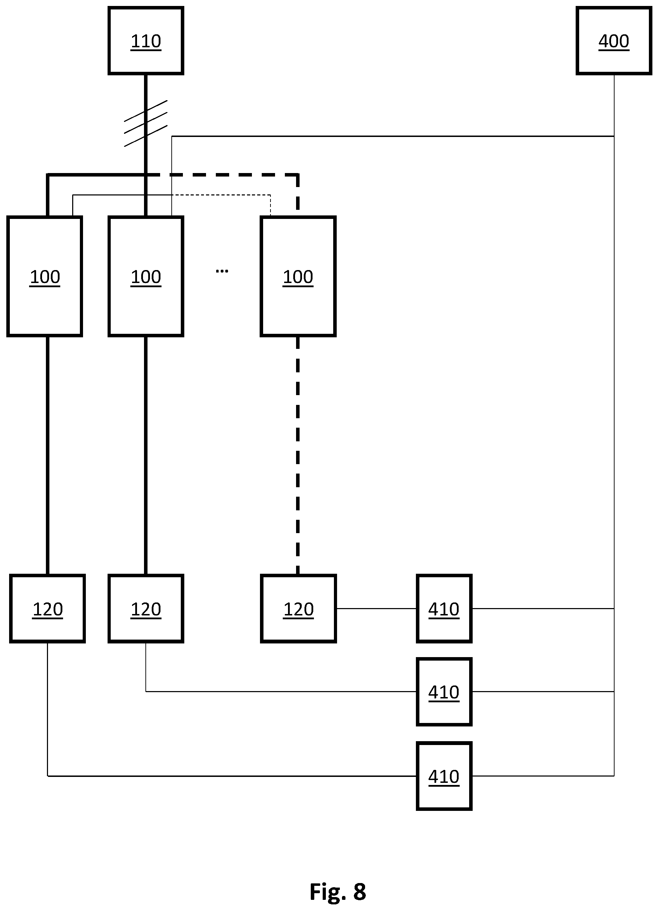

A system (not marked) for the supply of a plurality of electrodes 120 of an electric arc furnace, an electric reduction furnace or a submerged arc-resistance furnace in Figure 8 comprises a plurality of electrode regulators 410. Preferably, one electrode regulator 410 is connectable to only one height adjustment means (not shown), wherein each electrode 120 comprises one height adjustment means.

The plurality of power supply apparatuses 100 corresponds to the plurality of electrodes 120. In other words, one power supply apparatus 100 is connectable to only one electrode 120 resulting in a one to one allocation between one furnace power supply apparatus 100 and one electrode 120.

**List of reference numerals**

| | |
|---|---|
| 100 | Furnace power supply apparatus |
| 110 | Three phase power network |
| 120 | Electrode |
| 130 | AC/DC converter circuit |
| 140 | First buffer circuit |
| 150 | DC/DC converter circuit |
| 160 | Second buffer circuit |
| 170 | DC/AC converter circuit |
| 180 | DC chopper circuit |
| 200 | Electronic control unit |
| 300 | DC power source |
| 400 | Electric coordination and regulation unit |
| 410 | Electrode regulator |
| 500 | Power module |
| 510 | Power submodule |

**Claims**

1. Furnace power supply apparatus (100) for the supply of an electric arc furnace, electric reduction furnace or a submerged arc-resistance furnace with electric energy,

     - wherein the furnace power supply apparatus (100) is connectable to a three phase power network (110), preferably a medium-voltage three phase power network (110);
     - wherein the furnace power supply apparatus (100) is connectable to at least one electrode (120) of the electric arc furnace, electric reduction furnace or the submerged arc-resistance furnace,
     - wherein the furnace power supply apparatus (100) comprises:

         - at least one AC/DC converter circuit (130) connectable to the three phase power network (110) and configured to rectify an alternating current of at least one phase of the three phase power network (110), wherein the three phase power network (110) has a voltage level higher than or equal to 1000 VAC, and

- at least one DC/DC converter circuit (150) configured to handle a voltage level higher than or equal to 500 VDC, wherein the DC/DC converter circuit (150) is connected to the direct current side of the AC/DC converter circuit (130).

2. Furnace power supply apparatus (100) according to claim 1, **characterized in that** the power supply apparatus (100) comprises less than one transformer, preferably less than one step-down transformer, arranged between the three phase power network (110) and at least one electrode (120).

3. Furnace power supply apparatus (100) according to claim 1 or claim 2, **characterized in that** the AC/DC converter circuit (130) comprises at least one bidirectional AC/DC converter unit, preferably an active front-end circuit.

4. Furnace power supply apparatus (100) according to one of the preceding claims, **characterized in that** at least one DC/DC converter circuit (150) comprises at least one bidirectional DC/DC converter unit.

5. Furnace power supply apparatus (100) according to one of the preceding claims, **characterized in that** at least one DC/DC converter circuit (150) comprises at least one galvanically isolated DC/DC converter unit.

6. Furnace power supply apparatus (100) according to one of the preceding claims, **characterized in that** at least one DC/DC converter circuit (150) comprises at least one switching DC/DC converter unit.

7. Furnace power supply apparatus (100) according to one of the preceding claims, **characterized in that** at least one first buffer circuit (140) in direct current is interposed between the AC/DC converter circuit (130) and the DC/DC converter circuit (150) connecting the AC/DC converter circuit (130) and the DC/DC converter circuit (150), wherein the first buffer circuit (140) is configured to store energy and create a separation between the three phase power network (110) and the at least one electrode (120).

8. Furnace power supply apparatus (100) according to one of the preceding claims, **characterized in that** at least one DC power source (300), preferably a renewable DC power source (300) is connectable to the first buffer circuit (140).

9. Furnace power supply apparatus (100) according to one of the preceding claims, **characterized in that** the furnace power supply apparatus (100) comprises a plurality of AC/DC converter circuits (130) connected in parallel to each other, wherein the AC/DC converter circuits (130) are connected to a common first buffer circuit (140), preferably to a plurality of first buffer circuits (140).

10. Furnace power supply apparatus (100) according to one of the preceding claims, **characterized in that** at least one second buffer circuit (160) in direct current is interposed between the DC/DC converter circuit (150) and the at least one electrode (120) connecting the DC/DC converter circuit (150) and the at least one electrode (120) at least indirectly, wherein the second buffer circuit (160) is configured to store energy and create a separation between the three phase power network (110) and the at least one electrode (120).

11. Furnace power supply apparatus (100) according to one of the preceding claims, **characterized in that** the furnace power supply apparatus (100) comprises an electronic control unit (200), wherein the electronic control unit (200) is connectable to the AC/DC converter circuit (130) and configured to regulate an active power flow of the furnace power supply apparatus (100).

12. Furnace power supply apparatus (100) according to one of the preceding claims, **characterized in that** the furnace power supply apparatus (100) comprises at least one DC/AC converter circuit (170) configured to supply electric energy to at least one electrode (120), wherein at least one DC/DC converter circuit (150) is connected to at least one DC/AC converter circuit (170).

13. Furnace power supply apparatus (100) according to one of the claims 1 to 11, **characterized in that** the furnace power supply apparatus (100) comprises at least one DC chopper circuit (180) configured to supply electric energy to at least one electrode (120), wherein at least one DC/DC converter circuit (150) is connected to at least one DC chopper circuit (180).

14. System for the supply of at least one electric arc furnace and/or electric reduction furnace and/or submerged arc-resistance furnace with electric energy,

- wherein the system is connectable to at least one three phase power network (110);
- wherein the system is connectable to at least one electrode (120) of at least one electric arc furnace and/or electric reduction furnace and/or submerged arc-resistance furnace;

**characterized by the following features:**

- the system comprises a plurality of furnace power supply apparatuses (100) according to one of the preceding claims, and
- wherein the plurality of furnace power supply apparatuses (100) are connected in parallel to each other.

15. Electric arc furnace, electric reduction furnace or submerged arc-resistance furnace **characterized in that** the electric arc furnace, the electric reduction furnace or the submerged arc-resistance furnace comprises a furnace supply apparatus (100) according to one of the claims 1 to 13 and/or a system according to claim 14.

16. Use of a furnace power supply apparatus (100) according to one of the claims 1 to 13 to supply at least one electric arc furnace and/or electric reduction furnace and/or a submerged arc-resistance furnace with electric energy.

17. Method for operating an electric arc furnace or an electric reduction furnace or a submerged arc-resistance furnace according to claim 15, **characterized in that** the ratio of active power flow and reactive power flow is controlled and/or regulated by influencing a control quantity of an AC/DC converter circuit (130) and/or of a DC/DC converter circuit (150) and/or of a DC/AC converter circuit (170) and/or of a DC chopper circuit (180), in particular the reactive power flow is minimized by influencing a control quantity of the AC/DC converter circuit (130) and/or of the DC/AC converter circuit (170).

**Patentansprüche**

1. Ofenstromversorgungseinrichtung (100) zur Versorgung eines Lichtbogenofens, eines Elektroreduktionsofens oder eines Tauchlichtbogenofens mit elektrischer Energie,

   - wobei die Ofenstromversorgungseinrichtung (100) mit einem Dreiphasenstromnetz (110), vorzugsweise einem Dreiphasenstromnetz (110) mit mittlerer Spannung, verbindbar ist;
   - wobei die Ofenstromversorgungseinrichtung (100) mit mindestens einer Elektrode (120) des Lichtbogenofens, des Elektroreduktionsofens oder des Tauchlichtbogenofens verbindbar ist,
   - wobei die Ofenstromversorgungseinrichtung (100) umfasst:

      - mindestens eine AC/DC-Wandlerschaltung (130), die mit dem Dreiphasenstromnetz (110) verbindbar ist und konfiguriert ist, um einen Wechselstrom von mindestens einer Phase des Dreiphasenstromnetz (110) gleichzurichten, wobei das Dreiphasenstromnetz (110) einen Spannungspegel aufweist, der höher als oder gleich 1000 VAC ist, und
      - mindestens eine DC/DC-Wandlerschaltung (150), die konfiguriert ist, um einen Spannungspegel zu handhaben, der höher als oder gleich 500 VDC ist, wobei die DC/DC-Wandlerschaltung (150) mit der Gleichstromseite der AC/DC-Wandlerschaltung (130) verbunden ist.

2. Ofenstromversorgungseinrichtung (100) nach Anspruch 1, **dadurch gekennzeichnet, dass** die Ofenstromversorgungseinrichtung (100) weniger als einen Transformator, vorzugsweise weniger als einen Abwärtstransformator, umfasst, der zwischen dem Dreiphasenstromnetz (110) und mindestens einer Elektrode (120) angeordnet ist.

3. Ofenstromversorgungseinrichtung (100) nach Anspruch 1 oder 2, **dadurch gekennzeichnet, dass** die AC/DC-Wandlerschaltung (130) mindestens eine bidirektionale AC/DC-Wandlereinheit, vorzugsweise eine aktive Frontendschaltung, umfasst.

4. Ofenstromversorgungseinrichtung (100) nach einem der vorstehenden Ansprüche, **dadurch gekennzeichnet, dass** mindestens eine DC/DC-Wandlerschaltung (150) mindestens eine bidirektionale DC/DC-Wandlereinheit umfasst.

5. Ofenstromversorgungseinrichtung (100) nach einem der vorstehenden Ansprüche, **dadurch gekennzeichnet, dass** mindestens eine DC/DC-Wandlerschaltung (150) mindestens eine galvanisch isolierte DC/DC-Wandlereinheit umfasst.

6. Ofenstromversorgungseinrichtung (100) nach einem der vorstehenden Ansprüche, **dadurch gekennzeichnet, dass** mindestens eine DC/DC-Wandlerschaltung (150) mindestens eine schaltbare DC/DC-Wandlereinheit umfasst.

7. Ofenstromversorgungseinrichtung (100) nach einem der vorstehenden Ansprüche, **dadurch gekennzeichnet, dass** mindestens eine erste Pufferschaltung (140) im Gleichstrom zwischen der AC/DC-Wandlerschaltung (130) und der DC/DC-Wandlerschaltung (150) angeordnet ist, welche die AC/DC-Wandlerschaltung (130) und die DC/DC-Wandlerschaltung (150) verbindet, wobei die erste Pufferschaltung (140) konfiguriert ist, um Energie zu speichern und eine Trennung zwischen dem Dreiphasenstromnetz (110) und der mindestens einen Elektrode (120) zu erzeugen.

8. Ofenstromversorgungseinrichtung (100) nach einem der vorstehenden Ansprüche, **dadurch gekennzeichnet, dass** mindestens eine Gleichstromquelle (300), vorzugsweise eine erneuerbare Gleichstromquelle (300), mit der ersten Pufferschaltung (140) verbindbar ist.

9. Ofenstromversorgungseinrichtung (100) nach einem der vorstehenden Ansprüche, **dadurch gekennzeichnet, dass** die Ofenstromversorgungseinrichtung (100) eine Vielzahl von parallel miteinander verbundenen AC/DC-Wandlerschaltungen (130) umfasst, wobei die AC/DC-Wandlerschaltungen (130) mit einer gemeinsamen ersten Pufferschaltung (140), vorzugsweise mit einer Vielzahl von ersten Pufferschaltungen (140), verbunden sind.

10. Ofenstromversorgungseinrichtung (100) nach einem der vorstehenden Ansprüche, **dadurch gekennzeichnet, dass** mindestens eine zweite Pufferschaltung (160) im Gleichstrom zwischen der DC/DC-Wandlerschaltung (150) und der mindestens einen Elektrode (120) angeordnet ist, welche die DC/DC-Wandlerschaltung (150) und die mindestens eine Elektrode (120) zumindest indirekt verbindet, wobei die zweite Pufferschaltung (160) konfiguriert ist, um Energie zu speichern und eine Trennung zwischen dem Dreiphasenstromnetz (110) und der mindestens einen Elektrode (120) zu erzeugen.

11. Ofenstromversorgungseinrichtung (100) nach einem der vorstehenden Ansprüche, **dadurch gekennzeichnet, dass** die Ofenstromversorgungseinrichtung (100) eine elektronische Steuereinheit (200) umfasst, wobei die elektronische Steuereinheit (200) mit der AC/DC-Wandlerschaltung (130) verbindbar und konfiguriert ist, um einen Wirkleistungsfluss der Ofenstromversorgungseinrichtung (100) zu regeln.

12. Ofenstromversorgungseinrichtung (100) nach einem der vorstehenden Ansprüche, **dadurch gekennzeichnet, dass** die Ofenstromversorgungseinrichtung (100) mindestens eine DC/AC-Wandlerschaltung (170) umfasst, die konfiguriert ist, um mindestens einer Elektrode (120) elektrische Energie zuzuführen, wobei mindestens eine DC/DC-Wandlerschaltung (150) mit mindestens einer DC/AC-Wandlerschaltung (170) verbunden ist.

13. Ofenstromversorgungseinrichtung (100) nach einem der Ansprüche 1 bis 11, **dadurch gekennzeichnet, dass** die Ofenstromversorgungseinrichtung (100) mindestens eine DC-Chopperschaltung (180) umfasst, die konfiguriert ist, um mindestens einer Elektrode (120) elektrische Energie zuzuführen, wobei mindestens eine DC/DC-Wandlerschaltung (150) mit mindestens einer DC-Chopperschaltung (180) verbunden ist.

14. System zur Versorgung von mindestens einem Lichtbogenofen und/oder einem Elektroreduktionsofen und/oder einem Tauchlichtbogenofen mit elektrischer Energie,

    - wobei das System mit mindestens einem Dreiphasenstromnetz (110) verbindbar ist;
    - wobei das System mit mindestens einer Elektrode (120) von mindestens einem Lichtbogenofen und/oder einem Elektroreduktionsofen und/oder einem Tauchlichtbogenofen verbindbar ist;

**gekennzeichnet durch die folgenden Merkmale:**

    - das System umfasst eine Vielzahl von Ofenstromversorgungseinrichtungen (100) nach einem der vorstehenden Ansprüche, und
    - wobei die Vielzahl der Ofenstromversorgungseinrichtungen (100) parallel miteinander verbunden ist.

15. Lichtbogenofen, Elektroreduktionsofen oder Tauchlichtbogenofen, **dadurch gekennzeichnet, dass** der Lichtbogenofen, der Elektroreduktionsofen oder der Tauchlichtbogenofen eine Ofenversorgungseinrichtung (100) nach einem der Ansprüche 1 bis 13 und/oder ein System nach Anspruch 14 umfasst.

16. Verwendung einer Ofenstromversorgungseinrichtung (100) nach einem der Ansprüche 1 bis 13, um mindestens einen Lichtbogenofen und/oder einen Elektroreduktionsofen und/oder einen Tauchlichtbogenofen mit elektrischer Energie zu versorgen.

17. Verfahren zum Betreiben eines Lichtbogenofens oder eines Elektroreduktionsofens oder eines Tauchlichtbogenofens nach Anspruch 15, **dadurch gekennzeichnet, dass** das Verhältnis des Wirkleistungsflusses und des Blindleistungsflusses durch Beeinflussen einer Steuergröße einer AC/DC-Wandlerschaltung (130) und/oder einer DC/DC-Wandlerschaltung (150) und/oder einer DC/AC-Wandlerschaltung (170) und/oder einer DC-Chopperschaltung (180) gesteuert wird, insbesondere wird der Blindleistungsfluss durch Beeinflussen einer Steuergröße der AC/DC-Wandlerschaltung (130) und/oder der DC/AC-Wandlerschaltung (170) minimiert.

## Revendications

1. Appareil d'alimentation en puissance de four (100) destiné à l'alimentation d'un four à arc électrique, d'un four à réduction électrique ou d'un four à arc submergé, en énergie électrique,

- dans lequel l'appareil d'alimentation en puissance de four (100) peut être connecté à un réseau de puissance triphasé (110), de préférence un réseau de puissance triphasé (110) moyenne tension ;
- dans lequel l'appareil d'alimentation en puissance de four (100) peut être connecté à au moins une électrode (120) du four à arc électrique, du four à réduction électrique ou du four à arc submergé,
- dans lequel l'appareil d'alimentation en puissance de four (100) comprend :

- au moins un circuit convertisseur CA/CC (130) pouvant être connecté au réseau de puissance triphasé (110) et configuré pour redresser un courant alternatif d'au moins une phase du réseau de puissance triphasé (110), dans lequel le réseau de puissance triphasé (110) a un niveau de tension supérieur ou égal à 1000 VCA, et
- au moins un circuit convertisseur CC/CC (150) configuré pour gérer un niveau de tension supérieur ou égal à 500 VCC, dans lequel le circuit convertisseur CC/CC (150) est connecté au côté courant continu du circuit convertisseur CA/CC (130).

2. Appareil d'alimentation en puissance de four (100) selon la revendication 1, **caractérisé en ce que** l'appareil d'alimentation en puissance (100) comprend moins d'un transformateur, de préférence moins d'un transformateur abaisseur, agencé entre le réseau de puissance triphasé (110) et au moins une électrode (120).

3. Appareil d'alimentation en puissance de four (100) selon la revendication 1 ou la revendication 2, **caractérisé en ce que** le circuit convertisseur CA/CC (130) comprend au moins une unité de convertisseur CA/CC bidirectionnel, de préférence un circuit frontal actif.

4. Appareil d'alimentation en puissance de four (100) selon l'une des revendications précédentes, **caractérisé en ce qu'**au moins un circuit convertisseur CC/CC (150) comprend au moins une unité de convertisseur CC/CC bidirectionnel.

5. Appareil d'alimentation en puissance de four (100) selon l'une des revendications précédentes, **caractérisé en ce qu'**au moins un circuit convertisseur CC/CC (150) comprend au moins une unité de convertisseur CC/CC galvaniquement isolé.

6. Appareil d'alimentation en puissance de four (100) selon l'une des revendications précédentes, **caractérisé en ce qu'**au moins un circuit convertisseur CC/CC (150) comprend au moins une unité de convertisseur CC/CC de commutation.

7. Appareil d'alimentation en puissance de four (100) selon l'une des revendications précédentes, **caractérisé en ce qu'**au moins un premier circuit tampon (140) en courant continu est interposé entre le circuit convertisseur CA/CC (130) et le circuit convertisseur CC/CC (150) connectant le circuit convertisseur CA/CC (130) et le circuit convertisseur CC/CC (150), dans lequel le premier circuit tampon (140) est configuré pour stocker de l'énergie et créer une séparation entre le réseau de puissance triphasé (110) et l'au moins une électrode (120).

8. Appareil d'alimentation en puissance de four (100) selon l'une des revendications précédentes, **caractérisé en ce qu'**au moins une source de puissance CC (300), de préférence une source de puissance CC (300) renouvelable, peut être connectée au premier circuit tampon (140).

9. Appareil d'alimentation en puissance de four (100) selon l'une des revendications précédentes, **caractérisé en ce que** l'appareil d'alimentation en puissance de four (100) comprend une pluralité de circuits convertisseurs CA/CC (130) connectés en parallèle les uns aux autres, dans lequel les circuits convertisseurs CA/CC (130) sont connectés à un premier circuit tampon (140) commun, de préférence à une pluralité de premiers circuits tampons (140).

10. Appareil d'alimentation en puissance de four (100) selon l'une des revendications précédentes, **caractérisé en ce qu'**au moins un second circuit tampon (160) en courant continu est interposé entre le circuit convertisseur CC/CC (150) et l'au moins une électrode (120) connectant le circuit convertisseur CC/CC (150) et l'au moins une électrode (120) au moins indirectement, dans lequel le second circuit tampon (160) est configuré pour stocker de l'énergie et créer une séparation entre le réseau de puissance triphasé (110) et l'au moins une électrode (120).

11. Appareil d'alimentation en puissance de four (100) selon l'une des revendications précédentes, **caractérisé en ce que** l'appareil d'alimentation en puissance de four (100) comprend une unité de commande électronique (200), dans lequel l'unité de commande électronique (200) peut être connectée au circuit convertisseur CA/CC (130) et configurée pour réguler un flux de puissance active de l'appareil d'alimentation en puissance de four (100).

12. Appareil d'alimentation en puissance de four (100) selon l'une des revendications précédentes, **caractérisé en ce que** l'appareil d'alimentation en puissance de four (100) comprend au moins un circuit

convertisseur CC/CA (170) configuré pour alimenter en énergie électrique au moins une électrode (120), dans lequel au moins un circuit convertisseur CC/CC (150) est connecté à au moins un circuit convertisseur CC/CA (170).

13. Appareil d'alimentation en puissance de four (100) selon l'une des revendications 1 à 11, **caractérisé en ce que** l'appareil d'alimentation en puissance de four (100) comprend au moins un circuit hacheur CC (180) configuré pour alimenter en énergie électrique au moins une électrode (120), dans lequel au moins un circuit convertisseur CC/CC (150) est connecté à au moins un circuit hacheur CC (180).

14. Système destiné à l'alimentation d'au moins un four à arc électrique et/ou four à réduction électrique et/ou four à arc submergé, en énergie électrique,

   - dans lequel le système peut être connecté à au moins un réseau de puissance triphasé (110) ;
   - dans lequel le système peut être connecté à au moins une électrode (120) d'au moins un four à arc électrique et/ou four à réduction électrique et/ou four à arc submergé ;

   **caractérisé par** les caractéristiques suivantes :

   - le système comprend une pluralité d'appareils d'alimentation en puissance de four (100) selon l'une des revendications précédentes, et
   - dans lequel la pluralité d'appareils d'alimentation en puissance de four (100) sont connectés en parallèle les uns aux autres.

15. Four à arc électrique, four à réduction électrique ou four à arc submergé **caractérisé en ce que** le four à arc électrique, le four à réduction électrique ou le four à arc submergé comprend un appareil d'alimentation de four (100) selon l'une des revendications 1 à 13 et/ou un système selon la revendication 14.

16. Utilisation d'un appareil d'alimentation en puissance de four (100) selon l'une des revendications 1 à 13 pour alimenter au moins un four à arc électrique et/ou four à réduction électrique et/ou un four à arc submergé, en énergie électrique.

17. Procédé destiné à faire fonctionner un four à arc électrique ou un four à réduction électrique ou un four à arc submergé selon la revendication 15, **caractérisé en ce que** le rapport de flux de puissance active et de flux de puissance réactive est commandé et/ou régulé en influençant une quantité de commande d'un circuit convertisseur CA/CC (130) et/ou d'un circuit convertisseur CC/CC (150) et/ou d'un circuit convertisseur CC/CA (170) et/ou d'un circuit hacheur CC (180), en particulier le flux de puissance réactive est minimisé en influençant une quantité de commande du circuit convertisseur CA/CC (130) et/ou du circuit convertisseur CC/CA (170).

**Fig. 1**

**Fig. 2**

**Fig. 3**

**Fig. 4**

**Fig. 5**

**Fig. 6**

**Fig. 7**

**Fig. 8**

**EP 4 620 265 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 110350606 A
- US 20220286036 A
- EP 1421826 B1
- WO 2021224192 A1
- EP 4113813 A1